# FASCICULE DE BREVET EUROPEEN

(11) **EP 4 111 046 B1**
(45) Date de publication et mention de la délivrance du brevet: **03.01.2024**
(21) Numéro de dépôt: 21708280.9
(22) Date de dépôt: 08.02.2021
(51) Int. Cl.: F02M 25/022, F02M 25/028, F02M 25/03

(54) **AGENCEMENT DE FILTRATION ET UTILISATION D'UN DISPOSITIF DE FILTRATION, AVEC FONCTION ANTI-BULLES, POUR EPURER UNE EAU DESTINEE A UNE CHAMBRE DE COMBUSTION D'UN VEHICULE**
FILTRATIONSANORDNUNG UND VERWENDUNG EINE FILTRATIONSVORRICHTUNG MIT ANTI-BLASEN-FUNKTION, UM WASSER ZU REINIGEN, DAS FÜR EINE VERBRENNUNGSKAMMER EINES FAHRZEUGS BESTIMMT IST
FILTRATION ARRANGEMENT AND USE OF A FILTRATION DEVICE, WITH ANTI-BUBBLE FUNCTION, TO CLEAN WATER INTENDED FOR A COMBUSTION CHAMBER OF A VEHICLE

(30) Priorité: 28.02.2020 FR 2002038
(43) Date de publication de la demande: 04.01.2023
(73) Titulaire: Sogefi Filtration, 78280 Guyancourt (FR)
(72) Inventeur: COLLICARD, Florent, 35140 SAINT-AUBIN-DU-CORMIER (FR); RIVIERE, Lucie, 14310 SEULLINE (FR); BERLAND, Yann, 78660 ABLIS (FR)
(74) Mandataire: Plasseraud IP
(86) Numéro de dépôt international: PCT/FR2021/050226
(87) Numéro de publication internationale: WO 2021/170930

(56) Documents cités:
- EP-A1- 3 324 030
- DE-A1-102017 006 080
- DE-A1-102017 006 462
- US-A1- 2019 170 036

## Description

L'invention concerne les systèmes d'alimentation en eau à destination d'une chambre de combustion d'un véhicule motorisé, en complément du carburant, et plus particulièrement les agencements de filtration permettant de distribuer une eau filtrée afin de ne pas encrasser les injecteurs. L'invention concerne aussi un module de prélèvement d'eau incluant ce type d'agencement de filtration et une utilisation d'un dispositif de filtration mis en oeuvre dans une ligne de distribution d'eau vers un moteur à combustion interne.

II devient de plus en plus fréquent d'injecter de l'eau dans la chambre de combustion. L'injection d'eau dans un moteur à combustion interne peut permettre une réduction significative de la consommation de carburant, mais aussi de l'émission des polluants comme les particules fines, le monoxyde de carbone (réduction typiquement de 4 à 15 % de CO₂) et les hydrocarbures volatiles. L'injection d'eau peut se faire à différents endroits, notamment au niveau des injecteurs ou au niveau de la rampe d'injection, au niveau du répartiteur d'admission d'air. Un système d'injection d'eau pour un moteur à combustion interne est ainsi décrit dans le document EP 2789839.

Le document FR 3077340 décrit par exemple une boucle d'injection d'eau dans laquelle un filtre est placé afin de fournir de l'eau propre sans la contrainte de disposer d'un réservoir d'eau déminéralisée. Prévoir des réserves d'eau déminéralisée s'avère fastidieux et onéreux par comparaison avec un simple remplissage avec de l'eau courante, sachant en outre que le véhicule peut circuler dans une région où l'eau déminéralisée n'est pas aisément disponible. DE 10 2017 006080 A1, DE 10 2017 006462 A1, US 2019/170036 A1 et EP 3 324 030 A1 sont d'autres documents pertinents

Un inconvénient de ce type de filtration réside dans l'encombrement lié à la pompe et au dispositif filtrant requis pour distribuer de l'eau propre. De plus, il s'avère compliqué de disposer un média filtrant près d'une voie d'aspiration d'une pompe, puisque des problèmes ou limitations peuvent alors surgir, par exemple des problèmes de stabilité du traitement et/ou une impossibilité de prélever correctement de l'eau suffisamment bas.

Il a été aussi constaté au cours d'expériences que des bulles d'air peuvent se former dans le circuit d'eau, dans la zone (qui peut être sinueuse) située en aval de l'étage de filtration et en amont de la pompe. Ces bulles peuvent provoquer des phénomènes de cavitation et dégradent l'injection d'eau, ce qui conduit à une perte dans la maîtrise des doses d'eau liquide injectée.

Il existe donc un besoin pour mieux intégrer une ligne de distribution d'eau dans un véhicule (qui peut être déjà largement encombré), en minimisant l'apparition de phénomènes dégradant le processus d'injection d'eau.

Afin d'améliorer la situation, il est proposé selon l'invention un agencement d'épuration pour module de prélèvement d'eau, comprenant un dispositif de filtration pour épurer de l'eau liquide destinée à une chambre de combustion d'un véhicule, en étant placé dans un corps de module pourvu :
- d'un premier compartiment intérieur pour loger le dispositif de filtration de façon immergé dans l'eau dans un état monté du module dans un réservoir d'eau ; et
- d'un deuxième compartiment intérieur pour loger tout ou partie d'une pompe d'alimentation ;
le dispositif de filtration comprenant :
- un composant externe qui présente au moins une entrée par laquelle l'eau liquide du réservoir d'eau peut atteindre une région de filtration, une extrémité supérieure, un fond opposé à l'extrémité supérieure et une paroi latérale ;
- un média filtrant, fixé au composant externe en s'étendant dans la région de filtration, entre le fond et l'extrémité supérieure ; et
- une sortie d'évacuation d'eau liquide filtrée, le média filtrant étant interposé entre l'au moins une entrée et la sortie ;
sachant que le dispositif de filtration présente :
- un ensemble de liaison formé sur le composant externe et comprenant un raccord de connexion fluidique pour la connexion avec une voie d'aspiration d'eau liquide appartenant à la pompe d'alimentation ; et
- des moyens pour s'opposer à la présence de bulles d'air dans ladite voie d'aspiration, qui sont agencés en amont de la sortie formée par le raccord de connexion fluidique.

Avec cet agencement, il est permis de réaliser la filtration au plus près de la voie d'aspiration, ce qui permet un gain en compacité, par exemple en conformant le composant externe avec une géométrie concave complémentaire d'une paroi convexe servant à délimiter le compartiment de pompe. L'ensemble de liaison peut en outre être réalisé d'une pièce monobloc pour former à la fois un raccord de connexion fluidique et maintenir en position l'ensemble du dispositif de filtration dans une configuration de montage.

Le dispositif de filtration peut être intégré dans le module de prélèvement d'eau en incluant, en tant que moyens de suppression de bulles d'air, une toile ou couche analogue perméable à l'eau dont l'ouverture de maille est submillimétrique, par exemple de l'ordre de la dizaine de ., afin de barrer le passage à des bulles d'air en amont d'un passage inférieur de transition entre une zone de circulation d'eau filtrée adjacente au média et l'intérieur d'une paille d'aspiration adaptée pour remonter l'eau vers la sortie depuis le passage inférieur. L'aspiration vers un point bas correspondant au passage inférieur de liaison avec l'intérieur d'une telle paille d'aspiration rend le dispositif adapté pour un raccordement particulièrement court avec l'entrée d'aspiration de la pompe.

Le raccord de connexion fluidique peut avantageusement correspondre à une canule de piquage pour connecter le dispositif de filtration sur le port d'aspiration de la pompe. Le dispositif de filtration peut en outre être directement immergé dans le milieu (eau liquide) à filtrer, sans besoin de pièce d'assemblage intermédiaire entre l'enveloppe/composant externe incluant l'ensemble de liaison et le port d'aspiration.

Dans certaines formes de réalisation, le composant externe peut être un boîtier qui comprend une paroi latérale délimitée par la pièce ou les pièces constitutive(s) de l'élément de liaison et par une coque ajourée. La paroi latérale du boîtier comprend par exemple deux extrémités opposées fermées pour ne pas laisser passer l'eau via ces extrémités à l'intérieur du boîtier. Le média filtrant présente deux extrémités latérales correspondantes fixées chacune à l'une respective des deux extrémités opposées de la paroi latérale.

Selon une particularité, les moyens pour s'opposer à la présence de bulles d'air comprennent une couche ou toile perméable à l'eau liquide et/ou au moins un orifice d'écoulement d'eau liquide. Typiquement, ces moyens permettent de laisser passer de l'eau liquide dans un canal de circulation ascendante d'eau qui :
- s'étend en aval du média filtrant suivant le sens de filtration ; et
- communique avec la voie d'aspiration via la sortie.
Le canal de circulation ascendante peut être de section sensiblement constante à la manière d'une paille, cette configuration permettant à la pompe connectée au raccord de connexion fluidique d'aspirer de l'eau à un niveau bas proche de l'extrémité inférieure du dispositif de filtration. A titre d'exemple, une structure de paille est formée avec une extrémité basse de paille (formant le point ou zone d'aspiration), distante de moins de 15 ou 20 mm de l'extrémité inférieure. Avec un tel point bas, il est permis d'aspirer le volume déterminé/requis même si le niveau d'eau dans le réservoir d'eau est bas pour ne plus permettre une immersion totale du dispositif de filtration, par exemple si ce niveau d'eau est inférieur à mi-hauteur ou inférieur ou égal au quart de la hauteur du dispositif de filtration.

La couche ou toile perméable à l'eau liquide peut consister en un élément distinct du média filtrant et/ou laminé en tant que couche additionnelle avec une couche de séparation de poussières du média filtrant, pour s'opposer à la présence de bulles d'air dans la voie d'aspiration. Cet élément peut s'étendre de l'une à l'autre des extrémités fermées du composant externe.

Le boîtier (composant externe) peut être adapté pour s'étendre entièrement à l'intérieur du corps de pompe logeant la pompe d'alimentation. La sortie peut être une sortie unique orientée suivant une direction ou sens de sortie au moins décalée angulairement de 90° par rapport à n'importe quelle orientation des ouvertures d'entrée formées par le boîtier. La couche ou toile perméable à l'eau formant un moyen anti-bulle(s) peut être disposé dans le boîtier.

Le canal de circulation ascendante d'eau présente une entrée et un passage inférieur est prévu pour contourner par le bas la paroi de séparation délimitant ce canal. Le passage inférieur fait ainsi office de sas de transition entre la région de filtration située d'un côté de la paroi de séparation, et le canal situé de l'autre côté de la paroi de séparation. Le passage inférieur s'étend sous (et est délimité par) un bord inférieur de cette paroi de séparation qui est interposée entre le média filtrant et la sortie et qui rejoint l'extrémité supérieure. Un changement de direction à 180° peut être obtenu pour une partie du liquide filtré dans une sous-région faisant face à la paroi de séparation ; ce flux doit d'abord descendre le long d'une première face de la paroi de séparation en direction du passage inférieur, avant de remonter dans l'autre sens dans le canal de circulation ascendante. Le corps externe délimite intérieurement avec la paroi de séparation un tel canal de circulation ascendante dont la section de passage peut être sensiblement égale à ou proche de la section de la sortie définie dans le raccord de connexion fluidique.

La paroi de séparation peut être conçue en tant que pièce distincte de l'élément de liaison et/ou en tant que cloison sensiblement verticale dans l'agencement, cette paroi séparant la région de filtration d'une région d'évacuation en communication avec la sortie. Le passage inférieur est proche du fond ou longe le fond (en étant directement délimité par le fond du composant externe) pour acheminer de l'eau filtrée de la région de filtration vers la région d'évacuation. On comprend que cette paroi de séparation peut obliger l'eau à remonter de façon ascendante depuis le passage inférieur au moins jusqu'à un passage supérieur débouchant à l'intérieur d'un embout tubulaire mâle qui fait partie du raccord de connexion fluidique. La paroi de séparation et le passage inférieur sont par exemple prévus dans un espace intérieur délimité par le corps externe.

Les moyens pour s'opposer à la présence de bulles d'air peuvent inclure un orifice ou une zone poreuse, formé dans la paroi de séparation au-dessus d'un passage inférieur délimitant une entrée du canal de circulation ascendante. Dans le cas d'un orifice, celui-ci est de petite section par rapport à la section du passage inférieur délimitée sous la paroi de séparation, de sorte que la totalité de l'eau filtrée par le média filtrant passe par le passage inférieur ou par ledit orifice pour rejoindre la sortie. Ceci permet d'éviter le phénomène de formation de bulles en partie basse du canal qui est d'autant plus important que la hauteur d'une zone sans eau grandit dans le canal de circulation ascendante et/ou qu'une pression comparativement plus importante règne à l'extérieur de la structure de paille (ce qui est le cas lorsque la paroi de séparation délimitant en partie la structure de paille d'aspiration est très proche, à moins de 3 mm par exemple, de la face de sortie du média filtrant).

La formation de l'orifice ou d'une zone perméable à l'eau liquide à un niveau plus haut que la moitié de la hauteur de la paroi de séparation permet de limiter ou d'éviter ce phénomène. De préférence, le débouché dans le canal de l'orifice ou zone perméable peut être situé plus bas que le raccord de connexion fluidique et à une distance de l'extrémité supérieure du dispositif de filtration qui est au moins égale à la distance entre le bas de la structure de paille d'aspiration et l'extrémité inférieure du dispositif de filtration.

Les moyens pour s'opposer à la présence de bulles d'air peuvent agir en amont d'un passage inférieur (placé sous une paroi ou cloison de séparation) qui fait la transition entre le canal de circulation ascendante et la région de filtration, afin de :
- limiter, par un premier moyen perméable à l'eau et à effet barrière à des bulles d'air (typiquement avec un maillage adapté pour casser ces bulles) placé en amont du passage inférieur, la présence de bulles dans le flux d'eau filtrée sortant d'une face de sortie du média filtrant ; et
- limiter, par un deuxième moyen à fonction d'équilibrage de pression placé plus haut que le passage inférieur, la formation de bulles dans une région inférieure du canal adjacente au passage inférieur en cas de différence de pression entre le canal et la zone intercalée entre la paroi de séparation et le média filtrant, ce deuxième moyen pouvant inclure un orifice traversant la paroi de séparation ou une région poreuse perméable à l'eau pour former une dérivation par rapport au passage inférieur.

On réunit ainsi les fonctions de filtration d'eau (avec séparation de poussières notamment), d'aspiration, et de prévention de formation de bulles d'air dans un espace réduit, en limitant le risque de faire circuler de l'eau contenant des bulles à la sortie de la pompe. Il est permis en particulier d'éviter de laisser passer et/ou de former un nombre important de bulles d'air dans la moitié inférieure du canal de circulation ascendante ou toute zone analogue de remontée d'eau filtrée située juste en amont de la sortie.

L'orifice d'écoulement de liquide est de taille submillimétrique, afin de limiter le débit d'écoulement d'eau par la voie de dérivation formée par cet orifice, alors que la section du passage inférieur délimitée sous la paroi de séparation est typiquement plus grande et avec une hauteur supérieure à 5 ou 6 millimètres (i.e. d'un ordre de grandeur différente, au moins 10 fois plus grand), mesurée depuis le bord inférieur de la paroi de séparation.

Dans divers modes de réalisation de l'agencement, il est prévu une ou plusieurs des dispositions suivantes :
- le composant externe présente une coque réalisée d'une pièce pour former tout ou parties des ouvertures pour faire entrer l'eau dans la région de filtration.
- la coque est réalisée d'une seule pièce en matériau plastique (structure monobloc).
- les moyens pour s'opposer à la présence de bulles d'air comprennent la couche perméable à l'eau liquide agencée pour supprimer ou barrer le passage à des bulles d'air, au moins dans un état mouillé (par l'eau liquide) de la couche qui est sous la forme d'une toile, de préférence placée en amont par rapport à une région d'écoulement d'eau liquide filtrée formée le long de la paroi de séparation à l'opposé dudit canal.
- les moyens pour s'opposer à la présence de bulles d'air comprennent l'au moins un orifice d'écoulement d'eau liquide qui traverse la paroi de séparation en étant situé verticalement plus haut et à distance du bord inférieur, et plus bas que la sortie.
- l'orifice d'écoulement d'eau liquide prévu dans la paroi de séparation peut jouer initialement le rôle d'un orifice de dégazage, au moment du remplissage initial en haut du canal de circulation ascendante.
- la section de l'orifice peut être constante.
- l'orifice peut être calibré et correspond typiquement à une taille caractéristique comprise entre 0,2 et 0,9 mm, de préférence entre 0,3 et 0, 6 mm.
- les moyens pour s'opposer à la présence de bulles d'air dans la voie d'aspiration comprennent une toile perméable à l'eau liquide placée en amont d'une couche de média de retenue de particules solides et/ou des poussières.
- les moyens pour s'opposer à la présence de bulles d'air dans la voie d'aspiration comprennent une toile perméable à l'eau liquide placée en aval d'une couche de média de retenue de particules solides et/ou des poussières.
- l'ensemble de liaison délimite une voie coudée de circulation d'eau filtrée, la voie coudée incluant un canal de circulation ascendante d'eau filtrée par le média filtrant et un canal de sortie délimité par le raccord de connexion fluidique.
- la paroi de séparation est rapportée par fixation rigide sur l'élément de liaison qui inclut le raccord, ou (alternativement) le raccord de connexion fluidique est rapporté par fixation rigide sur une pièce constitutive de tout ou partie du composant externe et incluant la paroi de séparation.
- le média filtrant présente deux faces opposées dont l'une constitue une première face définissant tout ou partie d'une zone d'amont, en amont de la filtration par le média filtrant, et l'autre constitue une deuxième face délimitant une zone d'aval en communication avec la sortie.
- la paroi de séparation est interposée entre la deuxième face et le raccord de connexion fluidique pour séparer la région de filtration du canal de remontée (canal de circulation ascendante d'eau filtrée par le média filtrant) qui communique avec la sortie.
- la paroi de séparation consiste en une pièce d'un matériau plastique (à base d'un seul polymère, copolymère ou composite).
- la paroi de séparation s'étend sur plus de 60% de la hauteur totale du média filtrant, de préférence sur plus de 60% de la hauteur totale du composant externe et sur plus de 70 ou 75% de la hauteur totale du média filtrant.
- l'extrémité supérieure du corps externe est ajourée pour permettre, via une ou plusieurs ouvertures supérieures, une évacuation de gaz par le haut au moins dans une phase de remplissage en eau liquide au cours de laquelle l'eau atteint d'abord un niveau correspondant au passage inférieur avant de remplir davantage la région d'évacuation.
- la ou les ouvertures supérieures sont situées entièrement plus haut que et complètent au moins une ouverture inférieure formée dans l'extrémité inférieure et des ouvertures latérales formées dans la paroi latérale pour former un réseau d'ouvertures de remplissage en eau de la région de filtration.
- le composant externe présente un élément de paroi concave depuis laquelle fait saillie, vers l'extérieur, le raccord de connexion fluidique où est formée la sortie.
- le composant externe peut consister en un boîtier de forme générale arquée en vue de dessous, de sorte que l'élément de paroi a une surface externe dont la section en coupe horizontale a une forme de « U » ou de « C » délimitant un espace creux à l'extérieur du composant externe.
- le raccord de connexion fluidique est tubulaire et en saillie dans l'espace creux par rapport à l'élément de paroi.
- la hauteur du composant externe est inférieure ou égale à 120 mm, de préférence inférieure ou égale à 95 mm.
- l'épaisseur moyenne du média filtrant, mesurée (typiquement horizontalement) entre ses faces opposées d'entrée et de sortie est inférieure ou égale à 15 ou 22 mm.
- la longueur développée du média filtrant, qui est délimitée entre deux terminaisons opposées et distantes (terminaisons typiquement réparties de part et d'autre du raccord de connexion) est par exemple supérieure à 80 mm et inférieure ou égale à 150 mm.
- l'élément de paroi présente intérieurement des reliefs aptes à maintenir un espacement moyen, entre le média filtrant et une face intérieure de l'élément de paroi, supérieur ou égale à 1 ou 2 mm, les reliefs présentant entre eux des espacements pour permettre une circulation descendante d'eau filtrée par le média filtrant, en direction du passage inférieur.
- le canal de circulation ascendante est délimité entre l'élément de paroi, du côté extérieur du dispositif de filtration, et la paroi de séparation, du côté intérieur du dispositif de filtration.
- le boîtier forme un logement pour le média filtrant et délimite intérieurement, avec la paroi de séparation, la région de filtration.
- la filtration est réalisée de façon centripète (ou convergente vers une même région) de sorte que la première face du média est à l'opposé de l'espace creux et présente une surface supérieure à celle de la deuxième face du média filtrant.

Il est également proposé un module de prélèvement et distribution d'eau destinée à une chambre de combustion d'un véhicule, le module comprenant l'agencement de filtration selon l'invention, le dispositif de filtration étant connecté, de manière étanche et démontable, à un port de connexion fluidique qui :
- définit une entrée d'accès à la voie d'aspiration d'eau liquide ; et
- débouche extérieurement en direction du premier compartiment intérieur pour loger le dispositif de filtration,
ce grâce à quoi le dispositif de filtration est monté amovible dans le module en pouvant être retiré sélectivement du premier compartiment intérieur sans démonter un composant de la pompe d'alimentation.

La rechange du dispositif de filtration n'implique aucune intervention complexe de démontage d'un composant de pompe. Ce type de module permet de s'assurer d'une filtration efficace pendant une longue durée, par exemple en prévoyant de changer le dispositif de filtration de façon périodique, après un certain kilométrage parcouru qui peut être supérieur ou égal à 20000 ou 30000 km par exemple et/ou après un certain nombre d'années d'utilisation.

Selon une variante, il est proposé un module de prélèvement et distribution d'eau destinée à une chambre de combustion d'un véhicule, le module comprenant l'agencement de filtration selon l'invention, le dispositif de filtration étant connecté de manière indémontable à un port de connexion fluidique qui définit une entrée d'accès à la voie d'aspiration d'eau liquide, de sorte qu'il est impossible d'extraire le dispositif de filtration sans démonter un couvercle de la pompe d'alimentation.

Cet agencement, compatible avec l'utilisation d'un dispositif de filtration robuste et dont l'efficacité diminue peu au cours du temps, peut optimiser la compacité, en l'absence de besoin de débattement latéral pour extraire le dispositif de filtration.

Il est aussi proposé, selon l'invention, une utilisation d'un dispositif de filtration pour permettre de filtrer de l'eau liquide et acheminer cette eau dans une voie d'aspiration d'une pompe d'alimentation, dans un état immergé du dispositif de filtration à l'intérieur d'un réservoir d'eau présent dans un véhicule à moteur à combustion interne, la pompe étant prévue pour faire circuler l'eau filtrée vers une chambre de combustion du véhicule, le dispositif de filtration incluant :
i) un composant externe qui présente au moins une entrée par laquelle l'eau liquide du réservoir d'eau peut atteindre une région de filtration, une extrémité supérieure, un fond opposé à l'extrémité supérieure et une paroi latérale ;
ii) un média filtrant, fixé au composant externe en s'étendant dans la région de filtration entre le fond et l'extrémité supérieure ;
iii) une sortie d'évacuation d'eau liquide filtrée, le média filtrant étant interposé entre l'au moins une entrée et la sortie ;
iv) un ensemble de liaison formé sur le composant externe et comprenant un raccord de connexion fluidique pour la connexion avec une voie d'aspiration d'eau liquide appartenant à la pompe d'alimentation ; et
v) des moyens, distincts du média filtrant et/ou laminés en tant que couche additionnelle avec une couche de séparation de poussières du média filtrant, pour s'opposer à la présence de bulles d'air dans ladite voie d'aspiration, ces moyens étant agencés en amont de la sortie formée par le raccord de connexion fluidique ;
le dispositif de filtration étant monté à l'intérieur d'un boîtier qui est immergé dans le réservoir d'eau ou délimite une sous-partie du réservoir d'eau et qui loge aussi une partie moteur de la pompe d'alimentation.

Avec cette disposition, le dispositif de filtration est intégré de façon compacte contre une entrée d'aspiration d'une pompe d'alimentation en évitant de générer des bulles ou des déséquilibres de pression préjudiciables à la qualité du flux d'eau filtré à acheminer vers la chambre de combustion.

Selon une particularité, deux chemins séparés servent, en parallèle et dans un mode d'aspiration de la pompe, à acheminer de l'eau filtrée par le média filtrant dans le raccord de connexion fluidique formant la sortie, via une structure de paille d'aspiration qui s'étend entre un passage inférieur et un passage supérieur débouchant dans la sortie. Le passage inférieur peut être un passage de transition entre la région ou chambre de filtration et le canal de circulation ascendante formé par la structure de paille d'aspiration.

Dans des modes de réalisation, les deux chemins passent :
- l'un par une ouverture de passage formée à l'extrémité inférieure de la structure de paille d'aspiration verticale, au niveau du ou en position adjacente au passage inférieur, afin de permettre d'acheminer de l'eau filtrée située dans un point bas du réservoir d'eau ;
- l'autre par un orifice d'équilibrage de pression situé au moins 15 mm plus haut que l'ouverture de passage, cet orifice pouvant permettre un transfert d'eau filtrée entre l'intérieur de la structure de paille et la région de filtration,
et dans laquelle la section de passage de l'ouverture de passage est supérieure à la section de passage de l'orifice, et de préférence au moins dix fois plus grande.

Ainsi, lorsque le niveau d'eau filtrée est important et que le risque de générer des différences de pressions entre l'intérieur et l'extérieur de la paille d'aspiration est élevé (par exemple en raison du débit important d'eau sortant de la face aval du média filtrant et du faible espacement pour circuler vers le point d'aspiration de la paille), un équilibrage de pression peut se réaliser simplement en déversant de l'eau filtrée dans la paille par un accès plus haut distinct de son entrée d'aspiration.

On décrit maintenant brièvement les figures des dessins.
La figure 1 est une vue en coupe d'un dispositif de filtration conforme à l'invention, illustrant une voie de circulation d'eau filtrée formant un coude du côté de la sortie du dispositif.
La figure 2 est une vue en perspective du dispositif de filtration de la figure 1, montrant un ensemble de liaison du dispositif intégrant un élément de paroi et relié à une coque ajourée pour délimiter une chambre ou région de filtration.
La figure 3 est une vue éclatée du dispositif de la figure 1.
La figure 4 illustre schématiquement un exemple d'intégration d'un dispositif de filtration dans un compartiment distinct du compartiment recevant la pompe d'alimentation, dans une situation transitoire au cours d'un remplissage en eau avec l'air chassé progressivement par une extrémité supérieure du corps externe du dispositif.
La figure 5 est une vue similaire à celle de la figure 4, dans une situation de complète immersion du dispositif de filtration, le dispositif ayant un raccord de connexion fluidique étanche pour faire circuler l'eau filtrée vers le compartiment suivant recevant la pompe.
La figure 6 illustre un module de prélèvement d'eau pour une utilisation dans un véhicule motorisé, cette figure 6 omettant le dispositif de filtration, afin de montrer un exemple de prise de connexion femelle pouvant coopérer avec le raccord mâle formant la sortie du dispositif de filtration, en permettant un montage amovible du dispositif de filtration.
La figure 7 est une vue de face d'un couvercle fermant un compartiment de réception d'une pompe d'alimentation et définissant une voie d'aspiration avec une réduction progressive de section depuis une entrée d'accès à la voie d'aspiration.
La figure 8 est un schéma fonctionnel d'un système pour véhicule permettant l'injection d'eau dans une chambre de combustion du moteur du véhicule, illustrant ici la position du module de prélèvement d'eau dans un réservoir d'eau.
La figure 9 est une vue en perspective du côté intérieur d'un élément de liaison formant une partie de l'enveloppe ou du composant externe du dispositif de filtration, ici dans une option avec un canal de circulation ascendante délimité intérieurement par une paroi de séparation réalisée d'une pièce (monobloc) avec un élément de paroi externe complémentaire de la coque ajourée.

Ci-après un exposé détaillé de plusieurs modes de réalisation de l'invention assorti d'exemples et de référence aux dessins. Sur les différentes figures, des références identiques indiquent des éléments identiques ou similaires.

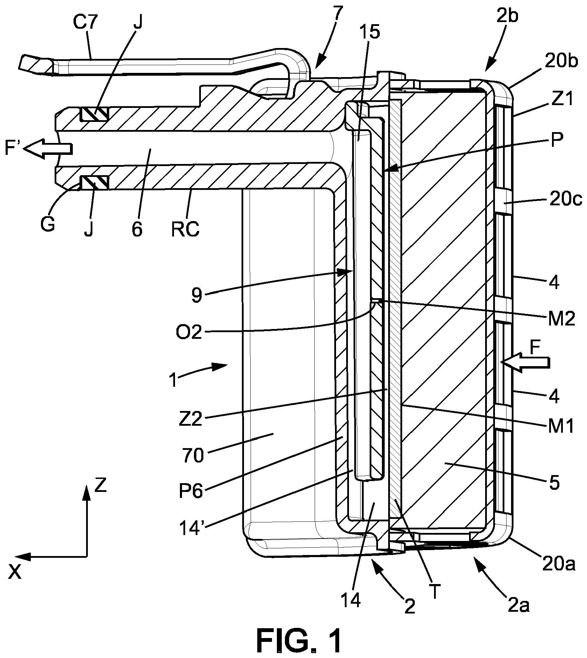

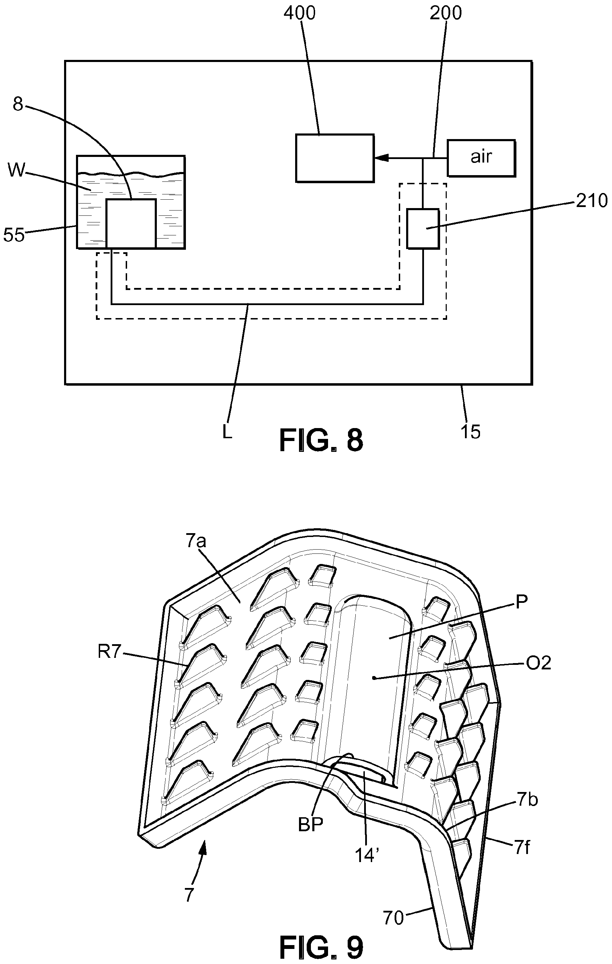

En référence aux figures 1, 4, 5 et 8, il est présenté un agencement de filtration permettant de filtrer de l'eau liquide dans un réservoir 55 (visible sur la figure 8) présent dans un véhicule motorisé. Comme illustré plus particulièrement sur la figure 8, une injection d'eau est prévue au niveau du moteur, cette eau étant injectée typiquement dans une ligne 200 d'alimentation en air pour être distribué de façon dosée dans la chambre de combustion 400. Le liquide filtré est typiquement de l'eau ou une solution liquide aqueuse permettant cette distribution via un injecteur 210 spécifique. Dans ce qui suit, il faut comprendre l'expression « eau » comme désignant ce type de liquide.

Sur la figure 8, on peut voir que l'eau W stockée dans un réservoir 55 peut être prélevée par un module 8 de prélèvement qui intègre un étage de filtration. Comme décrit ci-après, un dispositif de filtration 1 peut être intégré dans un tel réservoir 55 de façon compacte, en amont de l'aspiration, de sorte que la ligne de distribution L prévue entre le réservoir 55 et l'injecteur 210 puisse acheminer de l'eau liquide W filtrée qui ne nécessite plus de traitement de filtration. Optionnellement un chauffage de l'eau peut aussi être réalisé du côté du réservoir 55.

Dans des formes de réalisation compatibles avec un fonctionnement dans des régions froides, le module de prélèvement 8 est adapté pour permettre une mise à l'arrêt de la pompe d'alimentation 80 et vider les volumes d'eau dès que le moteur du véhicule 15 s'éteint. Ceci permet d'éviter les casses de pièces (notamment en hiver ou lors de nuits froides) à cause du gel. Il y a dans ce cas un amorçage (remplissage avec le volume d'eau) à chaque démarrage du véhicule 15. Lors de l'amorçage de la pompe d'alimentation 80, la pompe est typiquement à l'arrêt. Une structure à double boucle peut être prévue pour permettre une vidange de la ligne de distribution L. Pour cela, une boucle d'amorçage et une boucle pour faire l'injection d'eau dans le ou les injecteurs sont par exemple utilisées.

La figure 1 illustre un dispositif de filtration 1 pouvant être disposé verticalement, parallèlement à la direction d'axe Z. Sur cette figure 1, on a également représenté la direction d'axe X suivant laquelle un flux F' d'eau filtrée peut sortir du dispositif de filtration 1. Afin d'optimiser l'encombrement de ce dispositif de filtration 1, une configuration courbée, ici sensiblement parabolique, peut-être préférée, avec le plan XZ qui correspond par exemple à un plan médian séparant le média filtrant 5 en deux moitiés et passant par un raccord de connexion fluidique RC par lequel sort le flux F' d'eau filtrée.

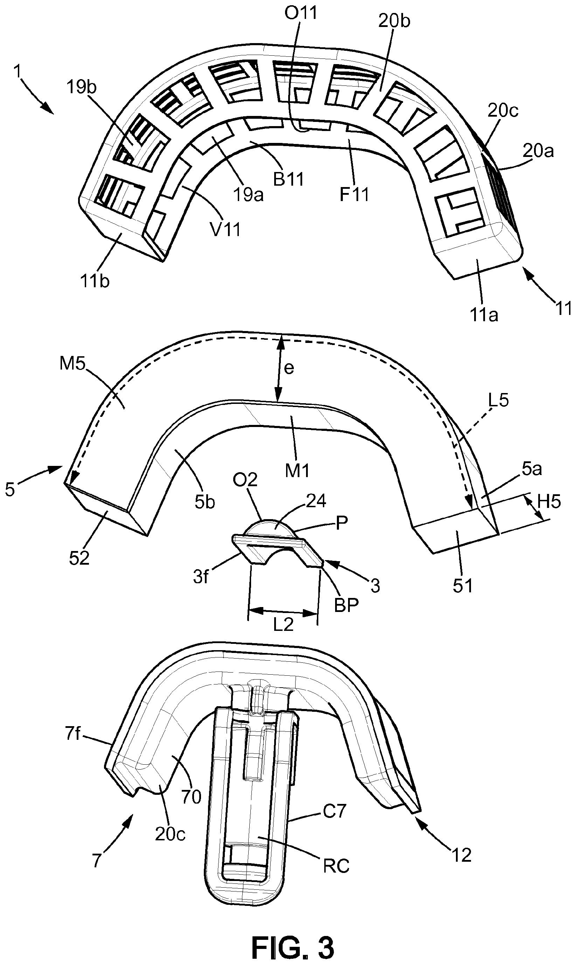

Comme bien visible sur la figure 3 par exemple, une telle configuration sensiblement parabolique permet de disposer d'une première face 5a d'entrée plus grande que la deuxième face 5b de sortie dans le média filtrant 5 courbé. En outre, l'eau filtrée peut converger vers un canal de section déjà réduite, placé juste avant le raccord RC, ce qui rend le raccord compatible avec une connexion directe avec un port d'aspiration d'une pompe d'alimentation 80. Plus généralement, le dispositif de filtration 1 peut présenter un encombrement réduit en épousant la forme externe d'un compartiment C2 où est logée la pompe d'alimentation 80. Dans certaines options, un chauffage de l'eau peut aussi être réalisé dans une région où la section de passage pour le flux F' d'eau filtrée est réduite. Dans des formes de réalisation, il peut être prévu de chauffer l'eau au moins dans une zone voisine d'une ou plusieurs entrées du dispositif de filtration 1.

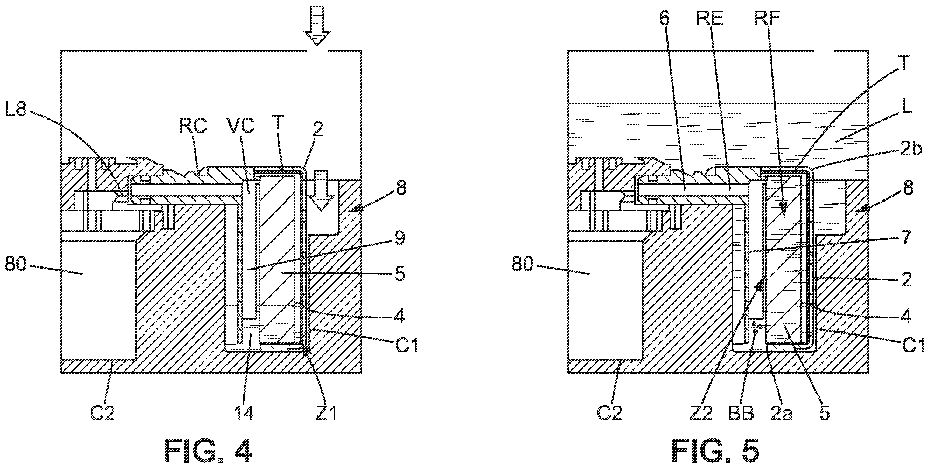

Les figures 4 et 5 montrent un premier exemple de compartiment C1, délimité typiquement par un corps 18 du module 8 de prélèvement, pouvant loger le dispositif de filtration 1 tout en laissant l'eau W circuler librement vers le fond ou partie basse analogue de ce compartiment C1. En pratique, le dispositif de filtration 1 peut-être monté dans le circuit de prélèvement et distribution d'eau (incluant la ligne L montrée sur la figure 8) lors d'une étape d'assemblage, en connectant le raccord RC de connexion fluidique du dispositif de filtration 1 avec une entrée E1 d'une pompe d'alimentation 80. L'ensemble pompe et filtre peut appartenir au module 8 de prélèvement d'eau qui est ici placé dans le réservoir 55. Cet ensemble est par exemple déjà en place dans le réservoir 55 lors d'une étape de remplissage en eau de ce dernier.

Dans la réalisation non limitative des figures 1 à 3, le dispositif de filtration 1 présente un composant externe 2 pour délimiter une chambre ou région de filtration RF. Le raccord RC peut-être un organe mâle de connexion, en formant un embout tubulaire ou canule qui s'étend autour d'un axe d'insertion qui est parallèle à l'axe X. Dans ce mode de réalisation, le composant externe 2 présente un fond 2a, une extrémité supérieure 2b et peut se dresser verticalement dans un état connecté à la pompe 80. Ici, la direction d'insertion peut être sensiblement horizontale, ou plus généralement perpendiculaire à l'extension (généralement verticale) du composant externe 2 entre son fond 2a et son extrémité supérieure 2b.

Le raccord RC peut former une sortie 6 pour acheminer de l'eau filtrée par le média filtrant 5 du dispositif de filtration 1 vers la pompe d'alimentation 80. Ce raccord RC s'insère ici dans un port de connexion fluidique complémentaire, par exemple réalisé sous la forme d'une prise femelle PF.

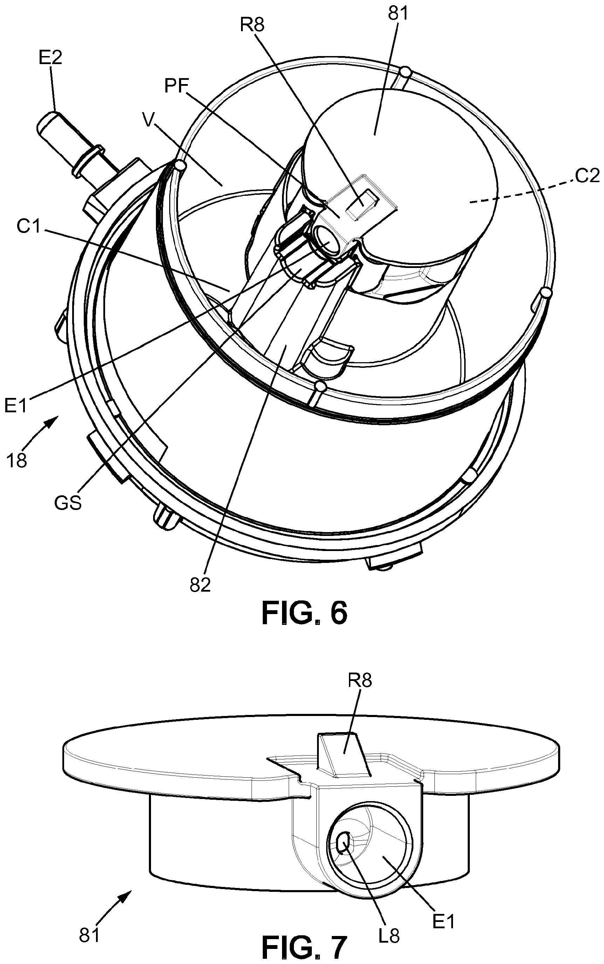

On décrit ci-après un exemple de connexion et d'intégration du dispositif de filtration 1. En référence aux figures 6 et 7, la prise femelle PF peut être prévue dans une partie supérieure d'un compartiment C2 pour loger la pompe d'alimentation 80. On comprend que le module 8 de prélèvement d'eau peut inclure un premier compartiment C1 pour le dispositif de filtration 1 et un deuxième compartiment C2 pour loger la pompe d'alimentation 80. On prévoit ici un corps de pompe 18 ayant une paroi latérale qui permet de délimiter un volume intérieur V dans lequel sont rassemblés différents composants du module 8. Le filtre ou dispositif de filtration 1 et la pompe d'alimentation 80 font partie de ces composants intégrés intérieurement dans le corps de pompe 18, dans le volume intérieur V.

Afin de sécuriser la connexion fluidique permettant de faire circuler l'eau filtrée par le dispositif de filtration 1 vers la pompe d'alimentation 80, le composant externe 2 est pourvu d'un organe C7 de fixation, permettant de maintenir le raccord RC dans un état d'insertion dans la prise femelle PF correspondant au port de connexion fluidique formant l'entrée E1. Cet organe C7 est par exemple un clip qui est accessible par le dessus des compartiments respectifs C1 et C2 pour le dispositif 1 et la pompe 80, ce clip pouvant s'étendre au-dessus d'un couvercle 81 de fermeture du deuxième compartiment C2 comme illustré sur les figures 4 à 7.

Ici, pour permettre une fixation amovible, on peut prévoir que le clip ou organe C7 de fixation similaire présente une fente F8 dans laquelle peut s'insérer un ergot saillant R8 formé sur le boîtier de la pompe d'alimentation 80, par exemple sur le couvercle 81 tel qu'illustré sur la figure 7. L'ergot R8 est ici saillant vers le haut. En variante on peut prévoir de réaliser l'organe de fixation C7 sous la forme d'une patte élastique munie d'un ergot saillant vers le bas est apte à s'engager dans un logement avec surface de butée prévu sur le boîtier de la pompe d'alimentation 80. Plus généralement tout type de fixation amovible peut-être prévu, par emboîtage élastique, déformation d'un organe élastiquement déformable rendue réversible par tout organe de déverrouillage approprié, ou fixation impliquant un organe additionnel tel qu'une vis, boulon ou similaire. Avantageusement dans l'exemple illustré, on peut se passer d'organe de fixation perdable, l'organe C7 étant inséparable du raccord RC, et par exemple intégralement formé (monobloc) avec un élément de liaison 7 qui fait partie du corps/composant externe 2 du dispositif de filtration 1.

En référence à l'exemple de la figure 6, la paroi latérale du corps de pompe 18 est espacée d'une partie de dos du dispositif 1. Cet espacement est important (en dépassant par exemple l'épaisseur e du média filtrant 5), de sorte qu'il existe un débattement suffisant pour permettre, après un désencliquetage de l'organe C7, de faire coulisser en arrière le raccord RC hors de la prise femelle PF. Ce mouvement de retrait peut être réalisé avec un guidage en coulissement (sensiblement horizontal dans cet exemple) permis ici par une surface GS de support et de guidage placée adjacente à l'entrée E1 et sur laquelle peut reposer une surface inférieure de la canule ou embout constituant la sortie 6 du dispositif de filtration 1. Le mode de fixation peut être réalisé différemment dans certaines options, par exemple en prévoyant un débouché vertical du raccord RC (que celui-ci soit coudé ou non du côté de son extrémité libre) afin de s'affranchir de l'espace de débattement horizontal.

Un exemple de réalisation du dispositif de filtration 1 va être à présent décrit plus particulièrement en référence aux figures 1, 2, 3 et 5.
Le dispositif de filtration 1 est adapté pour être immergé dans l'eau liquide W qui remplit le réservoir 55. Pour cela, le composant externe 2 peut être dépourvu de canule d'entrée et présente une paroi ajourée, qui forme ici la partie de dos du composant externe 2. En référence à la figure 3, la partie de dos peut consister en une coque 11 ajourée, de sorte à pouvoir loger et maintenir le média filtrant 5 dans une conformation arquée. Plus généralement, le média filtrant 5 est rendu solidaire du composant externe 2 de façon à présenter deux faces opposées 5a, 5b. Le média 5 inclut une ou plusieurs couches composées chacune d'un matériau de filtration qui s'étendent d'une première terminaison 51 à une deuxième terminaison 52 du média 5, entre ces deux faces opposées 5a, 5b. La longueur développée L5 du média 5 se mesure entre ces deux terminaisons 51, 52, comme visible sur la figure 3.

En référence à la figure 3, l'épaisseur e du média filtrant 5 peut être mesurée entre les deux faces opposées 5a, 5b. On peut noter que le média filtrant 5 est typiquement plus haut qu'épais, l'épaisseur e étant la plus petite des trois dimensions du média (plus petite que la hauteur H5 du média 5 et plus petite que sa longueur développée L5). La hauteur H5 peut être inférieure ou égale à 120 mm, de préférence inférieure ou égale à 70 ou 80 mm. On comprend que cette hauteur H5 peut être typiquement au moins 8 huit fois supérieure à la hauteur définie dans un passage inférieur 14 (visible sur la figure 1) où l'eau filtrée peut être aspirée via une structure de paille (P6, P) débouchant à sa partie haute (via un passage supérieur 15) sur la sortie 6.

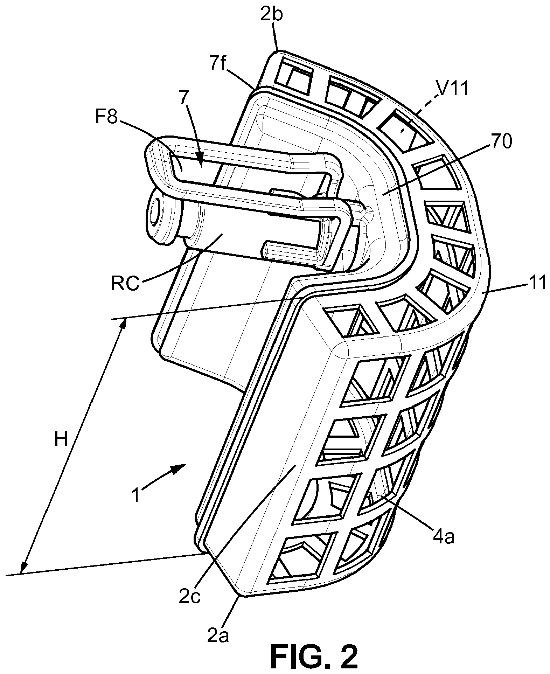

Parmi les deux faces opposées du média filtrant 5, l'une constitue une première face 5a définissant tout ou partie d'une zone d'amont Z1, en amont de la filtration par le média filtrant 5, et l'autre constitue une deuxième face 5b délimitant une zone d'aval Z2 en communication avec la sortie 6. Le composant externe 2 peut être ajouré du côté d'une face inférieure, une face supérieure et du côté de la première face 5a (face latérale d'entrée) du média filtrant 5. En référence aux figures 2 et 3, la coque 11 est une pièce d'enveloppement pourvue :
- d'un flasque inférieur du recouvrement de la face inférieure du média 5, ce flasque inférieur présentant optionnellement des ouvertures inférieures 19a par lesquelles de l'eau liquide peut entrer dans le volume interne V11 de la coque 11 ;
- d'un flasque supérieur de recouvrement de la face supérieure du média 5, ce flasque supérieur présentant optionnellement des ouvertures supérieures 19b ;
- une paroi verticale qui peut être courbée en formant la face extérieure de la partie de dos, cette paroi verticale s'étendant verticalement du flasque inférieur au flasque supérieur et présentant des ouvertures latérale 4a permettant à l'eau liquide de rejoindre la première face 5a ; et
- deux parties terminales de paroi 11a, 11b, formant des extrémités de la coque 11 suivant le sens de la longueur du média 5 et bouchant respectivement l'accès par l'extérieur aux terminaisons 51, 52.

Dans cet exemple, l'eau traversant le média 5 ne peut pas déboucher via les terminaisons 51, 52, celles-ci étant typiquement collées ou fixées d'une autre manière, de façon étanche, aux parties terminales de paroi 11a, 11b. De plus la coque 11 est complétée par une pièce 12 de fermeture. Une partie de bordure B11 de la coque 11, délimitant la face d'insertion F11, peut aussi servir de support de fixation étanche pour le média 5, afin de supprimer toute voie de dérivation entre la zone d'amont Z1 la zone d'aval Z2. D'une manière générale, le dispositif de filtration 1 peut présenter un média filtrant 5 conçu et configuré pour filtrer la totalité de l'eau arrivant jusqu'à la sortie 6 (cette eau filtrée devant traverser la deuxième face 5b dans l'exemple illustré). La configuration avec une partie profilée de la coque 11, à section en U et ajourée, permet à trois faces différentes du média 5 (la face latérale 5a et les faces de dessous et de dessus) de définir des faces d'entrée pour l'eau liquide W. Plus généralement, on préfère utiliser au moins deux faces distinctes du média 5 pour l'acheminement de l'eau liquide W dans la région de filtration RF.

Comme bien visible sur la figure 3, la coque 11 présente une face d'insertion F11 qui peut être entièrement ouverte, afin de permettre l'insertion et la mise en place du média filtrant 5 dans le volume interne V11 délimité par cette coque 11 via l'ouverture O11 correspondante. La forme externe et les dimensions du média 5 peuvent être adaptées pour remplir de façon ajustée le volume interne V11, de façon à combler l'ouverture O11 de la face d'insertion F11. Cette ouverture O11 est obturée par une pièce 12 de fermeture qui peut être notamment du genre illustré en bas de la figure 3 et associée à une autre pièce 3 interne pour former la paille (P6, P) d'aspiration.

La coque 11 et l'élément de liaison 7 peuvent délimiter une face périphérique latérale 20c en forme de croissant, ils peuvent aussi former, après assemblage les faces horizontales opposées 20a, 20b qui forment chacune un « C » relativement épais (pour permettre de loger le média 5).

Le dispositif de filtration 1 comporte ici :
- un composant externe 2, de préférence rigide, qui présente au moins une entrée 4 par laquelle l'eau liquide W du réservoir 55 peut atteindre une région de filtration RF, une extrémité supérieure 2b, un fond 2a opposé à l'extrémité supérieure 2b et une paroi latérale 2c ; et
- le média filtrant 5, fixé au composant externe 2 en s'étendant dans la région de filtration RF, typiquement entre le fond 2a et l'extrémité supérieure 2b.

Le composant externe 2 peut se décomposer en au moins deux parties soudées l'une à l'autre ou clipsées ensemble. Dans l'exemple des figures 1 à 3, le composant externe 2 inclut la coque 11 et une pièce 12 incluant l'élément de paroi 70 obturant la face F11 de sorte que le liquide filtré par la face 5b s'écoule le long d'une face interne de l'élément de paroi 70 avant de rejoindre la sortie 6 intégrée en tant que canule qui fait saille vers l'extérieur, ici selon la direction d'axe X. La canule constitue ici un raccord RC de connexion fluidique mâle, qui peut optionnellement recevoir un joint torique J ou joint technique annulaire similaire, par exemple en étant logé dans une gorge annulaire G délimitée près de l'extrémité libre de la canule.

Dans une variante, comme par exemple dans le cas de la figure 9, une partie de base P6 pouvant être formée d'une pièce avec le raccord de connexion fluidique RC, peut aussi faire partie du composant externe 2, en étant rapporté sur l'élément de paroi 70 (qui forme à lui seul la pièce de fermeture de la face F11, dans le cas illustré sur la figure 9).

L'élément de paroi 70 est optionnellement concave (vu de l'extérieur) lorsque le compartiment C1 pour le dispositif 1 s'étend le long d'une partie de boîtier tubulaire de la pompe d'alimentation 80. Le raccord RC fait saillie, vers l'extérieur, depuis cet élément de paroi 70 ou depuis cet élément complété par la partie de base P6. Le raccord RC peut s'appuyer sur une surface GS de support de et de guidage avant de se connecter de façon étanche à la prise femelle PF. Ainsi, la sortie 6 peut directement déboucher vers et faire face à une voie L8 d'aspiration appartenant à la pompe d'alimentation 80, comme visible sur les figures 4 et 5 (voir également la figure 7 - raccordement direct à la voie L8).

On comprend que le composant externe 2 peut consister en un boîtier de forme générale arquée, avec une forme sensiblement parabolique en vue de dessous ou de dessus, de sorte que l'élément de paroi 70 a une surface externe dont la section en coupe horizontale a une forme de « U » ou de « C » délimitant un espace creux à l'extérieur du composant externe 2. Bien que les dessins montrent un raccord de connexion fluidique RC en saillie dans l'espace creux par rapport à l'élément de paroi 70, on peut prévoir d'autres formes de réalisation du raccord RC, dès lors qu'il est permis de raccorder la sortie 6 à la voie L8 d'aspiration du flux F' d'eau liquide filtrée par le média 5. De la même façon, l'eau liquide provenant du réservoir 55 peut être amenée de diverses façons dans la région de filtration RF et l'utilisation d'une coque 11 ajourée soudée à une autre partie pleine (élément de paroi 70) n'est qu'un exemple de réalisation pour permettre au dispositif de filtration 1 d'être immergé dans l'eau du réservoir.

Comme visible sur la figure 1, le dispositif de filtration 1 présente des moyens M1, M2 pour s'opposer à la présence de bulles d'air dans la voie d'aspiration L8 par suppression et/ou évacuation de bulles d'air (bulles BB pouvant se former ou atteindre une région basse proche de la paille d'aspiration, comme montré sur la figure 5) au niveau de l'étage de filtration, de sorte que de telles bulles d'air BB ne dépassent pas la région de filtration RF. Pour cela, de tels moyens M1, M2 sont agencés en amont de la sortie 6 formée par le raccord de connexion fluidique RC. Une toile T peut ainsi être intégrée dans le média filtrant 5 afin de favoriser le passage d'eau et barrer le passage des bulles d'air. La toile T est par exemple intégrée lors d'une étape de laminage, en étant agencée comme une couche supplémentaire.

Typiquement, le média filtrant 5 peut inclure une partie ou couche de média à poussières M5 et la toile T qui présente une épaisseur plus faible que l'épaisseur de la couche de média de séparation de poussières M5. Cette configuration peut être obtenue en formant un média plissé ou non plissé. Lorsque le média filtrant 5 inclut une partie ou couche de média à poussières M et la toile T, on limite la complexité d'assemblage du dispositif 1.

Dans des variantes, la toile T peut être fixée ou surmoulée sur une paroi, par exemple une paroi ajourée à travers laquelle peut circuler l'eau. La toile T peut se situer dans la région de filtration RF, en étant directement fixée sur le composant externe 2.

La toile T forme une maille dont les passages ou interstices ont une taille favorable au passage de l'eau. De plus la toile T peut inclure un matériau hydrophile utilisé au moins dans un revêtement de surface de cette toile T, de préférence comme constituant de la toile T. La toile est conçue pour empêcher ou inhiber l'écoulement de gaz, comme par exemple, mais sans s'y limiter, les bulles de gaz/d'air (c'est-à-dire le gaz emprisonné dans l'eau liquide W). Dans certaines options de réalisation, le dispositif de filtration 1 comprend une toile T formant un tamis dont le maillage est fin. La toile peut être en polymère synthétique (par exemple, nylon, polyéthylène, polypropylène, etc.). Les zones de passage étant non visibles à l'œil nu, le terme toile T est ici utilisé, par opposition au terme de « grille » qui suppose de percevoir nettement les ouvertures de passage.

La toile T peut être flexible, semi-rigide ou rigide. Indépendamment de sa position relative par rapport à la couche principale du média filtrant 5, la toile T présente une taille de maille donnée et présente la caractéristique d'avoir une perte de charge plus élevée vis-à-vis de l'air que de l'eau, et d'autant plus que la toile est mouillée.

Dans l'exemple de la figure 1, la toile T forme la face 5b du média filtrant 5. En variante, elle peut être interposée entre cette face 5b est un passage inférieur 14 par lequel le liquide filtré par la ou les couches du média filtrant 5 s'écoule avant de remonter vers la sortie 6. Plus généralement, on peut placer ce type de moyens M1 de suppression de bulles d'air en aval d'une couche principale du média filtrant 5 servant à séparer les poussières ou particules solides analogues, dans la zone d'aval Z2.

Selon d'autres modes de réalisation, cette toile T peut être placée en amont du média filtrant 5. On comprend que la taille de maille de la toile T puisse s'opposer au passage de bulles d'air, en tout cas pour ce qui concerne les bulles d'air ayant une taille supérieure à celle de la taille de maille. Une ouverture ou taille de maille de 100 microns réduit en pratique suffisamment la quantité de bulles de gaz (bulles d'air) dans la zone d'aval Z2, de sorte qu'on puisse considérer que le flux d'eau liquide filtrée amené vers la sortie 6 est un flux continu de liquide, malgré une zone de circulation ascendante d'eau liquide filtrée prévue du côté de la sortie. Une ouverture ou taille de maille comprise entre 1 et 100, de préférence entre 1 et 50 microns peut être utilisée dans certaines formes de réalisation.

Le cas échéant, la toile T peut être surmoulée sur une paroi nervurée et placée en regard de la face 5a amont du média 5. La toile T peut alors former une couche préfiltrante, en contact avec l'eau liquide W du réservoir 55, en recouvrant de manière espacée (vu de l'extérieur) tout ou partie de la face 5a.

En référence aux figures 1, 4 et 5, on peut voir que l'eau filtrée peut converger vers un canal 9 de circulation ascendante menant vers la sortie 6 formée dans le raccord RC. Pour cela, il peut être prévu dans le corps externe 2 un ensemble 7 de liaison qui inclut le raccord RC dans une position plus haute que le fond 2a du boîtier de filtre ou composant externe 2, en délimitant une voie coudée VC de circulation d'eau filtrée, visible sur la figure 4. La voie coudée VC inclut ici :
- le canal 9 de circulation ascendante d'eau filtrée par le média filtrant 5, qui peut longer l'élément de paroi 70 appartenant à l'ensemble de liaison 7 ; et
- un canal de sortie délimité par le raccord de connexion fluidique RC.
Bien que les dessins montrent un canal 9 de circulation ascendante agencé parallèlement à la direction d'axe Z est un canal de sortie horizontale (parallèle à la direction d'axe X), d'autres directions compatibles avec une configuration coudée peuvent être utilisées.

Le passage inférieur 14 forme un passage de transition, entre la région de filtration RF où sont placées la ou les couches de filtration et l'éventuelle toile T et la région d'évacuation RE qui peut correspondre à la voie coudée VC ou une voie similaire avec un tronçon de remontée de l'eau filtrée.

Afin de délimiter le canal 9 de circulation ascendante, il est prévu une paroi P de séparation qui est solidaire de ou inclus dans l'élément 7 de liaison. Dans l'exemple illustré, cette paroi P consiste en une pièce 3 semi tubulaire, comme visible sur la figure 3. La paroi P comprend une extrémité haute fermée 24, une portion latérale agencée comme un demi-tube qui s'étend de l'extrémité haute jusqu'à un bord inférieur qui délimite le passage inférieur 14. Plus généralement on peut utiliser toute structure adaptée pour délimiter, ici à l'intérieur du composant externe 2, le canal 9 de circulation ascendante, de préférence en prévoyant une paroi P de séparation afin que le flux sortant de la face 5b du média filtrant 5 soit dévié vers le bas (pour contourner la paroi P) avant de remonter dans le canal 9 correspondant ici à une paille d'aspiration.

La paroi P de séparation peut présenter une hauteur au moins égale à 75% de la hauteur H5 du média filtrant 5. En référence à la figure 3, lorsqu'une structure en demi-tube est prévue pour former la paroi P, cette dernière peut être éloignée de chacune des terminaisons 51, 52 du média filtrant 5 et présenter une largeur L2 inférieure d'au moins un facteur trois ou quatre par rapport à la longueur développée L5 du média filtrant (avec L2 / L5 ≤ 3). La pièce 3 peut recouvrir entièrement par l'intérieur la jonction avec le raccord RC. La pièce 3 présente éventuellement une bride 3f en U inversé permettant sa fixation, par collage ou soudure par exemple, contre l'élément de paroi 70.

La pièce 3 peut être en matière plastique moulée et soudée à une autre pièce en plastique moulée constituant l'élément de paroi 70. Dans des modes de réalisation préférés, l'ensemble de liaison 7 est réalisé d'un seul bloc pour constituer à la fois le raccord RC, l'organe C7 et l'élément de paroi 70 sur lequel est soudé ou fixé intérieurement la paroi P.

Dans la variante de la figure 9 ou dans d'autres exemples, la paroi P fait partie intégrante de l'élément de paroi 70, de préférence en délimitant un évidement ou creusement permettant de former le canal 9. L'obturation du canal 9 par l'extérieur est réalisée par un élément rapporté qui peut être solidaire ou conçue d'une seule pièce avec le raccord RC.

Quelle que soit la conception choisie pour réaliser la paroi P, on peut obtenir un cloisonnement, avec un agencement de cette paroi P interposé entre la deuxième face 5b et le raccord de connexion fluidique RC, de sorte que la paroi P forme une cloison séparant la région de filtration RF du canal 9 de circulation ascendante d'eau filtrée par le média filtrant 5. En référence aux figures 4 et 5, on peut voir que l'arrivée d'eau par le bas du dispositif 1 permet à l'eau d'atteindre le niveau du passage inférieur 14, ce qui conduit rapidement à isoler du canal 9 de circulation ascendante l'air présent au-dessus de l'eau dans la région de filtration RF. La ou les ouvertures 19b peuvent en outre faciliter l'échappement d'air par le haut, au moins dans une telle phase de remplissage en eau liquide W au cours de laquelle l'eau atteint d'abord un niveau correspondant au passage inférieur 14 avant de remplir davantage la région d'évacuation RE. Comme visible sur les figures 1 et 4, 5, la ou les ouvertures supérieures 19b sont situées entièrement plus haut que le niveau de la sortie 6, qui est lui-même écarté verticalement du fond 2a (en étant situé plus haut).

En référence plus particulièrement à la figure 1 et à la figure 5, on décrit à présent un moyen M2 formé sur la paroi P de séparation et permettant de limiter ou supprimer la présence de bulles d'air dans ladite voie d'aspiration L8. Ce moyen M2 a une fonction de passage de fluide pour permettre un équilibrage de pression et peut consister en au moins un trou calibré, ici un orifice O2 dont la taille est suffisante pour permettre d'alimenter la région d'évacuation RE en liquide (eau filtrée) s'accumulant dans une zone descendante longeant la face 5b de sortie du média filtrant. On déverse ainsi un peu d'eau filtrée, transférée entre la région de filtration RF et la structure tubulaire de paille d'aspiration, formée par l'assemblage de la pièce 3 et de l'ensemble de liaison. L'orifice O2 a une section de passage dont la dimension caractéristique (diamètre ou diamètre équivalent) est comprise par exemple dans la gamme allant de 0,3 et 0,6 millimètres. L'orifice O2 se situe en hauteur pour être décalé verticalement bien plus haut que le passage inférieur 14, ici à environ deux tiers de l'extrémité inférieure 2a à titre d'exemple non limitatif.

Plus généralement, on peut prévoir tout moyen M2 formant un passage d'eau filtrée, que ce soit sous la forme d'un petit orifice O2 de taille submillimétrique ou d'une grille ou région poreuse perméable à l'eau filtrée formée dans une zone de la paroi P dont l'extension peut atteindre quelques millimètres.

Sur la figure 1, l'orifice O2 s'étend au travers de la paroi P, par exemple de façon horizontale. Dans cet exemple non limitatif, l'orifice O2 peut être plus proche du passage supérieur 15 (passage où se situe la jonction du raccord RC menant à la voie d'aspiration L8) que du passage inférieur 14.

En référence à la figure 5, à la fin du remplissage en eau (imprégnation/immersion complète du dispositif 1), on peut voir dans le dispositif de filtration 1 qu'il peut rester une poche d'air dans la voie coudée VC ou tout autre voie similaire de la région d'évacuation (en aval du passage inférieur 14). Cette poche d'air peut être chassée, en activant la pompe 80, typiquement dans une phase d'amorçage. Cependant, la présence de l'orifice O2, à fonction de dégazage, peut permettre de faire fuiter davantage d'air dès le début (fonction d'évent de l'orifice O2). En pratique, l'orifice O2 peut constituer un évent d'équilibrage de pression.

Un bon équilibre de pression entre le côté sale et le côté propre permet de récupérer plus sûrement de l'eau (i.e. uniquement de l'eau filtrée) à la sortie 6 du dispositif de filtration 1. Or, lorsque l'eau filtrée est aspirée au niveau de la région d'évacuation RE par mise en fonctionnement de la pompe 80, le niveau d'eau côté propre en aval du média 5 entre la paroi P et la toile T ou face de sortie du média 5 peut baisser rapidement par comparaison au niveau d'eau dans la paille. Un transfert limité d'eau filtrée est alors permis via l'orifice O2, ici dans le sens d'un retour vers la région de filtration RF si le niveau d'eau a trop baissé le long de toile T ou face de sortie du média 5.

Ici, l'orifice O2 établit une communication entre le canal de circulation ascendante 9 et la partie de zone d'aval Z2 située dans la région de filtration RF, afin d'atteindre une situation non déséquilibrée en pression dans le canal 9. Ceci limite efficacement le risque d'avoir un manque de remplissage en eau liquide en aval du passage inférieur 14.

L'orifice O2 évite de se retrouver dans une situation de déficit d'eau important d'un seul côté de la paroi de séparation P. Ainsi, avec une voie coudée VC ou autre configuration similaire formant la paille d'aspiration près de la sortie 6, il peut être évité des irrégularités ou la présence de bulles dans l'alimentation en eau vers la pompe 80. L'orifice O2 ou moyens M2 analogues d'équilibrage de pression permettent de s'opposer à la génération de bulles d'air près du passage inférieur 14 dans la zone en aval Z2, tandis que les moyens M1 tels que la toile T s'opposent à ce que des bulles (tout du moins pas des bulles d'air de taille significative) dépassent la toile T prévue en amont de la paroi de séparation P, c'est-à-dire en amont du passage inférieur 14.

Les moyens M1, M2 du genre décrits ci-dessus ici s'opposent efficacement à la présence de bulles d'air en sortie de filtre et donc dans la voie d'aspiration L8 pour protéger la pompe 80. Ils permettent aussi d'éviter les phénomènes de cavitation. En fonctionnement, ceci contribue à améliorer efficacement l'injection d'eau en maîtrisant précisément la quantité d'eau injectée.

Dans des options avec une paroi P6 ou P davantage espacée du média filtrant 5, on peut éventuellement se passer de l'orifice O2 ou de moyens M2 similaires formant au moins une voie d'équilibrage de pression en parallèle du passage inférieur 14, car plus on augmente le volume côté propre (à l'intérieur), moins on a besoin de cet orifice. En effet, le fait de prévoir davantage d'espace en aval du média 5 limite le risque de voir apparaître des bulles d'air, sachant que les moyens M1 prévus pour supprimer les bulles par un effet barrière, par exemple sous forme de toile T, sont efficaces pour prévenir l'arrivée de bulles dans la région du passage inférieur 14.

En référence aux figures 4, 5 et 6, le dispositif de filtration 1 est intégré dans un module 8 de prélèvement de l'eau, ici dans le volume intérieur V délimité par un corps externe du module 8. Le corps externe du module 8, d'une hauteur qui ne dépasse pas 150 ou 160 mm, peut délimiter plusieurs compartiments C1, C2, comme visible sur la figure 6, dont l'un sert à loger de façon étanche un mécanisme ou moteur d'une pompe d'alimentation 80. La pompe d'alimentation 80 peut être électrique. Elle présente l'entrée E1 et une sortie E2. La paroi externe latérale du corps du module peut être pourvue de tronçons de cylindre. La compacité en hauteur est réduite, du même ordre de grandeur que la longueur d'un téléphone portable.

Dans l'exemple illustré sur la figure 6, le module 8 peut contenir le dispositif de filtration 1 dans une zone périphérique au compartiment C1 logeant tout ou partie de la pompe d'alimentation 80. L'ensemble constituant le module 8, tel que montré sur la figure 6, peut tenir dans un espace cubique de l'ordre de 5 ou 6 dm³, à l'éventuellement exception d'une canule formant la sortie E2. Par ailleurs, la hauteur H du dispositif 1, comme visible sur la figure 2, peut être similaire ou légèrement inférieure à la plus grande dimension d'encombrement latéral. Cette hauteur H est par exemple comprise entre 45 et 70 mm, tandis que l'extension latérale maximale du dispositif 1 peut être inférieure ou égale à 90 ou 95 mm.

Dans un mode d'injection, l'eau liquide W est pompée par la pompe d'alimentation 80 pour sortir du module 8 via la sortie E2. Le dispositif de filtration 1 est placé en amont de la pompe d'alimentation 80 suivant le sens de circulation du liquide dans le mode d'injection. Le dispositif 1 empêche donc les impuretés d'atteindre l'entrée E2 de la pompe d'alimentation 80.

En fonctionnement, l'eau W entre dans le dispositif filtrant 1 au moins par le bas et la face de la partie de dos exposée à l'eau remplissant le réservoir 55, via les régions d'accès ou ouvertures 4a, 19a, 19b délimitées par le composant externe 2 ou composant d'enveloppe analogue. Ces ouvertures forment la partie d'entrée ou entrée 4 du dispositif 1.

Un exemple non limitatif d'un module 8 de prélèvement d'eau va à présent être décrit en référence aux figures 4 à 7. Le module 8 est adapté pour être monté dans une ouverture d'une paroi inférieure d'un réservoir 55. Le module 8 comporte un corps de module 18 délimitant un volume intérieur V pour la réception de l'eau liquide W ou solution aqueuse analogue. Le module 8 comprend une pompe d'alimentation 80, par exemple avec un partie moteur (par exemple un moteur à commutation électronique, généralement appelé BLDC), une transmission et d'autre composant habituels. La pompe d'alimentation 80 peut être constituée au moins de trois parties distinctes :
- la partie moteur, qui fournit la puissance nécessaire au pompage ;
- la transmission ; et
- la partie hydraulique, qui transmet la puissance qui lui est transmise par la transmission à l'eau pour la déplacer (l'aspirer et/ou la refouler).
La pompe d'alimentation 80 peut être d'un genre connu en soi.

Ici, on ne décrit pas trop en détail la pompe 80 et ses composants, dans la mesure où une large variété d'unités de pompage peut être utilisée. On peut se référer au descriptif du document EP 3324031 A1 pour certains détails des entrées et sorties associées à un dispositif de pompage permettant de former le module 8 de prélèvement d'eau.

Un dispositif de chauffage peut être prévu à proximité de parois intérieures délimitant le volume V et qui permettent ici de chauffer l'eau. Le chauffage est de préférence un chauffage électrique. Le compartiment C2 peut être délimité par une paroi extérieure dont la forme est telle qu'un volume intérieur est créé pour recevoir un groupe de pompe d'alimentation 80 et optionnellement une pompe à jet.

Le dispositif de filtration 1 peut consister en un filtre compact qui est intégré dans le module 8 en étant immergé dans l'eau W, en amont de la pompe d'alimentation 80, en mode injection, c'est-à-dire en amont de l'entrée E1. Dans la version illustrée, le module 8 peut contenir le compartiment C2 qui forme un réceptacle étanche pour le moteur de la pompe d'alimentation 80 et un compartiment C1 périphérique pour le dispositif de filtration 1. L'eau W entre dans le compartiment périphérique qui forme le premier compartiment C1, passe à travers le média filtrant 5 du dispositif de filtration 1 et quitte le compartiment C1 périphérique en pénétrant dans l'entrée E1.

En référence à la figure 1, après la filtration via le média 5, et la suppression de bulles au niveau de la toile T, le niveau du flux d'eau filtré et sortant de la face 5b peut être plus ou moins bas, selon que le réservoir 55 est plus ou moins rempli. La structure de paille formée ici par la réunion des parois P6 et P permet d'aspirer l'eau à point relativement bas. Dans le cas de la figure 1, deux chemins séparés servent, en parallèle et dans un mode d'aspiration de la pompe 80, à acheminer l'eau filtrée dans le raccord de connexion fluidique RC via la structure de paille d'aspiration. Ces deux chemins passent :
- l'un par l'ouverture 14' de passage formée à l'extrémité inférieure de la structure de paille d'aspiration verticale (entrée de la paille formant le canal 9), en position adjacente au passage inférieur 14, afin de permettre d'acheminer de l'eau filtrée située à un bas niveau du réservoir d'eau 55 ;
- l'autre par l'orifice O2 d'équilibrage de pression situé plus haut (ici au moins 15 ou 25 mm plus haut) que l'ouverture 14' de passage, afin de permettre d'acheminer de l'eau filtrée à l'intérieur de la structure de paille, tant que le niveau de remplissage du réservoir d'eau 55 atteint ou dépasse le niveau de l'orifice O2.

Ici, la section de passage de l'ouverture 14' est supérieure à la section de passage de l'orifice O2, et de préférence au moins dix fois plus grande. Dans la variante de la figure 5, en l'absence de l'orifice O2, on peut voir qu'il peut subsister un risque significatif de formation de bulles d'air BB, qui est d'autant plus important que le média 5 est proche du canal 9 (avec un faible espacement vis-à-vis de la paroi P). Dans ce cas, le passage inférieur 14 constitue le chemin unique pour contourner la paroi P et toute l'eau filtrée passe ainsi par ce passage inférieur 14.

En référence à la figure 9, il est illustré -du côté intérieur - l'élément de liaison 7 dans une option de réalisation avec le raccord RC rapporté sur l'élément de paroi 70. Avec ce type de conception, le traitement de l'eau peut être identique au cas susmentionné et décrit notamment en liaison avec la figure 1.

L'élément de paroi 70 montré sur la figure 9 peut consister en une pièce formée séparément du raccord RC et constitutive du boîtier ou composant externe 2. Plus particulièrement, l'élément de liaison 7 peut être réalisé en deux parties ou en deux pièces :
- une pièce 12 formant l'élément de paroi 70, apte à former une partie complémentaire de la coque 11, cette pièce 12 incluant deux panneaux 7a, 7b latéralement séparés l'un de l'autre ainsi qu'une partie intermédiaire reliant les deux panneaux 7a, 7b et portant la paroi de séparation P ; et
- le raccord de connexion fluidique RC qui inclut l'embout tubulaire de connexion et la partie de base P6 pour la fixation du raccord RC par l'extérieur sur la partie intermédiaire, de sorte que la partie de base P6 et la paroi de séparation P délimitent le canal 9 de circulation ascendante.

De préférence, la pièce 12 formant l'élément de paroi 70 est en matériau plastique rigide et incurvée du côté extérieur, de sorte que les panneaux 7a, 7b forment en coupe horizontale les deux branches d'une section en « U », en étant situés de part et d'autre du raccord RC. La paroi de séparation P peut être formée en saillie vers l'intérieur par rapport au reste de l'élément de paroi 70, en ayant son bord inférieur BP décalée plus haut que l'extrémité inférieure de l'élément de paroi 70. Cette disposition permet, en l'absence de paroi de fond inférieure reliée au bord inférieur BP, de délimiter par le bord inférieur BP une ouverture relativement étroite qui débouche verticalement vers le bas. Cette ouverture est ici l'ouverture de passage verticale 14' de la structure de paille d'aspiration qui est formé à l'état assemblé de la partie de base P6 et de la paroi de séparation P.

Comme visible sur la figure 9, des nervures intérieures R7, éventuellement horizontales, ou tout autre type de reliefs internes font saillie vers l'intérieur pour maintenir un espacement relatif entre le média filtrant 5 et la face interne de l'élément de liaison 7. Ceci permet d'optimiser la compacité et l'assemblage du média filtrant 5. L'élément de paroi 70 peut, après installation du média 5 dans la coque 11, être directement soudé ou fixé d'une autre façon à la bordure B11 de la coque 11, par exemple en utilisant une bride de soudage, un flasque ou un rebord 7f annulaire.

## Revendications

1. Agencement d'épuration pour module (8) de prélèvement d'eau, comprenant un dispositif de filtration (1) pour épurer de l'eau liquide (W) destinée à une chambre de combustion (400) d'un véhicule (15), en étant placé dans un corps de module (18) pourvu :
- d'un premier compartiment intérieur (C1) pour loger le dispositif de filtration (1) de façon immergé dans l'eau dans un état monté du module (8) dans un réservoir d'eau (55) ; et
- d'un deuxième compartiment intérieur (C2) pour loger tout ou partie d'une pompe d'alimentation (80) ;
le dispositif de filtration (1) comprenant :
- un composant externe (2) qui présente au moins une entrée (4) par laquelle l'eau liquide (W) du réservoir d'eau peut atteindre une région de filtration (RF), une extrémité supérieure (2b), un fond (2a) opposé à l'extrémité supérieure (2b) et une paroi latérale (2c) ;
- un média filtrant (5), fixé au composant externe (2) en s'étendant dans la région de filtration (RF) entre le fond (2a) et l'extrémité supérieure (2b) ; et
- une sortie (6) d'évacuation d'eau liquide filtrée, le média filtrant (5) étant interposé entre l'au moins une entrée (4) et la sortie (6) ;
sachant que le dispositif de filtration (1) présente :
- un ensemble (7) de liaison formé sur le composant externe (2) et comprenant un raccord de connexion fluidique (RC) pour la connexion avec une voie (L8) d'aspiration d'eau liquide appartenant à la pompe d'alimentation (80) ; et
- des moyens (M1, M2) pour s'opposer à la présence de bulles d'air dans ladite voie d'aspiration (L8), qui sont agencés en amont de la sortie (6) formée par le raccord de connexion fluidique (RC).

2. Agencement selon la revendication 1, dans lequel les moyens (M1, M2) pour s'opposer à la présence de bulles d'air comprennent une couche ou toile (T) perméable à l'eau liquide, conçue et agencée pour permettre de laisser passer de l'eau liquide dans un canal (9) de circulation ascendante d'eau qui :
- s'étend en aval du média filtrant (5) suivant le sens de filtration ; et
- communique avec la voie d'aspiration (L8) via la sortie (6).

3. Agencement selon la revendication 2, dans lequel le canal (9) de circulation ascendante d'eau présente une entrée (14') adjacente à ou réalisée au niveau d'un passage inférieur (14) délimité par un bord inférieur (BP) d'une paroi (P) de séparation qui est interposée entre le média filtrant (5) et la sortie (6) et qui rejoint l'extrémité supérieure (2b),
et dans lequel les moyens (M1, M2) pour s'opposer à la présence de bulles d'air comprennent :
- la couche perméable à l'eau liquide agencée pour supprimer ou barrer le passage à des bulles d'air (BB), au moins dans un état mouillé par l'eau liquide de la couche qui est sous la forme d'une toile (T), de préférence placée en amont par rapport à une région d'écoulement d'eau liquide filtrée formée le long de la paroi de séparation (P) à l'opposé dudit canal (9) ; et
- au moins un orifice (O2) d'écoulement d'eau liquide qui traverse la paroi de séparation (P) en étant situé verticalement plus haut et à distance du bord inférieur (BP), et plus bas que la sortie (6).

4. Agencement selon la revendication 1, 2 ou 3, dans lequel lesdits moyens (M1, M2) pour s'opposer à la présence de bulles d'air dans ladite voie d'aspiration (L8) comprennent une toile (T) perméable à l'eau liquide placée en amont d'une couche (L5) de média de retenue de particules solides et/ou des poussières.

5. Agencement selon la revendication 1, 2 ou 3, dans lequel lesdits moyens (M1, M2) pour s'opposer à la présence de bulles d'air dans ladite voie d'aspiration (L8) comprennent une toile (T) perméable à l'eau liquide placée en aval d'une couche de média de retenue de particules solides et/ou des poussières.

6. Agencement selon l'une quelconque des revendications 1 à 5, dans lequel l'ensemble (7) de liaison délimite une voie coudée (VC) de circulation d'eau filtrée, la voie coudée incluant un canal (9) de circulation ascendante d'eau filtrée par le média filtrant (5) et un canal de sortie délimité par le raccord de connexion fluidique (RC).

7. Agencement selon la revendication 6, comprenant une paroi (P) de séparation solidaire de ou inclus dans l'élément (7) de liaison,
dans lequel le média filtrant (5) présente deux faces opposées (5a, 5b) dont l'une constitue une première face (5a) définissant tout ou partie d'une zone d'amont (Z1), en amont de la filtration par le média filtrant (5), et l'autre constitue une deuxième face (5b) délimitant une zone d'aval (Z2) en communication avec la sortie (6),
et dans lequel la paroi (P) de séparation est interposée entre la deuxième face (5b) et le raccord de connexion fluidique (RC) pour séparer la région de filtration (RF) du canal (9) de circulation ascendante d'eau filtrée par le média filtrant (5), ledit canal (9) communiquant avec la sortie (6).

8. Agencement selon l'une quelconque des revendications 1 à 7, dans lequel le dispositif de filtration (1) comprend :
- une paroi (P) de séparation conçue en tant que cloison sensiblement verticale dans l'agencement et séparant la région de filtration (RF) d'une région d'évacuation (RE) en communication avec la sortie (6) ; et
- un passage inférieur (14) proche du fond (2a) ou longeant le fond (2a) pour acheminer de l'eau filtrée de la région de filtration (RF) vers la région d'évacuation (RE) ;
et dans lequel la paroi (P) de séparation est configurée pour obliger l'eau à remonter de façon ascendante depuis le passage inférieur (14) au moins jusqu'à un passage supérieur (15) débouchant à l'intérieur d'un embout tubulaire mâle qui fait partie du raccord de connexion fluidique (RC).

9. Agencement selon la revendication 8, dans lequel l'extrémité supérieure (2b) du composant externe (2) est ajourée pour permettre, via une ou plusieurs ouverture supérieures (19b), une évacuation de gaz par le haut au moins dans une phase de remplissage en eau liquide (W) au cours de laquelle l'eau atteint d'abord un niveau correspondant au passage inférieur (14) avant de remplir davantage la région d'évacuation (RE).

10. Agencement selon la revendication 9, dans lequel la ou les ouvertures supérieures (19b) sont situées entièrement plus haut que et complètent au moins une ouverture inférieure (19a) formée dans l'extrémité inférieure (2a) et des ouvertures latérales (4a) formées dans la paroi latérale (2c) pour former un réseau d'ouvertures (4a, 19a, 19b) de remplissage en eau de la région de filtration (RF).

11. Agencement selon l'une quelconque des revendications précédentes, dans lequel le composant externe (2) présente un élément de paroi (70) concave depuis laquelle fait saillie, vers l'extérieur, le raccord de connexion fluidique (RC) où est formée la sortie (6).

12. Module (8) de prélèvement et distribution d'eau destinée à une chambre de combustion (400) d'un véhicule (15), le module comprenant l'agencement de filtration selon l'une quelconque des revendications 1 à 11, le dispositif de filtration (1) étant connecté, de manière étanche et démontable, à un port de connexion fluidique qui :
- définit une entrée (E1) d'accès à la voie (L8) d'aspiration d'eau liquide ; et
- débouche extérieurement en direction du premier compartiment intérieur (C1) pour loger le dispositif de filtration (1),
ce grâce à quoi le dispositif de filtration (1) est monté amovible dans le module (8) en pouvant être retiré sélectivement du premier compartiment intérieur (C1) sans démonter un composant de la pompe d'alimentation (80).

13. Module (8) de prélèvement et distribution d'eau destinée à une chambre de combustion (400) d'un véhicule (15), le module comprenant l'agencement de filtration selon l'une quelconque des revendications 1 à 11, le dispositif de filtration (1) étant connecté de manière indémontable à un port de connexion fluidique qui définit une entrée (E1) d'accès à la voie (L8) d'aspiration d'eau liquide, de sorte qu'il est impossible d'extraire le dispositif de filtration (1) sans démonter un couvercle (81) de la pompe d'alimentation (80).

14. Utilisation d'un agencement d'épuration pour module (8) de prélèvement d'eau selon l'une quelconque des revendications 1 à 11 pour permettre de filtrer de l'eau liquide (W) et acheminer cette eau dans une voie d'aspiration (L8) d'une pompe d'alimentation (80), dans un état immergé du dispositif de filtration (1) à l'intérieur d'un réservoir d'eau (55) présent dans un véhicule (15) à moteur à combustion interne, la pompe (80) étant prévue faire circuler l'eau filtrée vers une chambre de combustion (400) du véhicule (15), le dispositif de filtration (1) incluant :
i) un composant externe (2) qui présente au moins une entrée (4) par laquelle l'eau liquide (W) du réservoir d'eau peut atteindre une région de filtration, une extrémité supérieure (2b), un fond (2a) opposé à l'extrémité supérieure (2b) et une paroi latérale (2c) ;
ii) un média filtrant (5), fixé au composant externe (2) en s'étendant dans la région de filtration entre le fond (2a) et l'extrémité supérieure (2b) ;
iii) une sortie (6) d'évacuation d'eau liquide filtrée, le média filtrant (5) étant interposé entre l'au moins une entrée (4) et la sortie (6) ;
iv) un ensemble (7) de liaison formé sur le composant externe (2) et comprenant un raccord de connexion fluidique (RC) pour la connexion avec une voie d'aspiration d'eau liquide appartenant à la pompe d'alimentation (80) ; et
v) des moyens (M1, M2), distincts du média filtrant (5) et/ou laminés en tant que couche additionnelle avec une couche de séparation de poussières du média filtrant (5), pour s'opposer à la présence de bulles d'air dans ladite voie d'aspiration (L8), lesdits moyens (M1, M2) étant agencés en amont de la sortie (6) formée par le raccord de connexion fluidique (RC) ;
le dispositif de filtration (1) étant monté à l'intérieur d'un boîtier qui est immergé dans le réservoir d'eau (55) ou délimite une sous-partie du réservoir d'eau et qui loge aussi une partie moteur de la pompe d'alimentation (80).

15. Utilisation selon la revendication 14, dans laquelle deux chemins séparés servent, en parallèle et dans un mode d'aspiration de la pompe (80), à acheminer de l'eau filtrée par le média filtrant (5) dans le raccord de connexion fluidique (RC) formant la sortie (6), via une structure de paille d'aspiration qui s'étend entre un passage inférieur (14) et un passage supérieur (15) débouchant dans la sortie (6), les deux chemins passant :
- l'un par une ouverture (14') de passage formée à l'extrémité inférieure de la structure de paille d'aspiration verticale, en position adjacente au passage inférieur (14), afin de permettre d'acheminer de l'eau filtrée située dans un point bas du réservoir d'eau (55) ;
- l'autre par un orifice (O2) d'équilibrage de pression situé au moins 15 mm plus haut que ladite ouverture (14') de passage, afin de permettre un transfert d'eau filtrée entre l'intérieur de la structure de paille et la région de filtration (RF),
et dans laquelle la section de passage de l'ouverture (14') de passage est supérieure à la section de passage de l'orifice (O2), et de préférence au moins dix fois plus grande.

## Patentansprüche

1. Reinigungsanordnung für ein Wasserentnahmemodul (8), aufweisend eine in einem Modulkörper (18) anzuordnende Filtrationsvorrichtung (1) zum Reinigen von flüssigem Wasser (W), das für eine Verbrennungskammer (400) eines Fahrzeugs (15) bestimmt ist, wobei der Modulkörper (18) versehen ist mit:
- einem ersten Innenraum (C1) zum Unterbringen der Filtrationsvorrichtung (1) derart, dass sie in Wasser getaucht ist, wenn das Modul (8) in ein Wasserreservoir (55) eingesetzt ist; und
- einem zweiten Innenraum (C2) zum Unterbringen einer Speisepumpe (80) ganz oder teilweise;
wobei die Filtrationsvorrichtung (1) aufweist:
- eine äußere Komponente (2), die aufweist: mindestens einen Eingang (4), durch den das flüssige Wasser (W) des Reservoirs einen Filtrationsbereich (RF) erreichen kann, ein oberes Ende (2b), einen dem oberen Ende (2b) gegenüberliegenden Boden (2a) und eine Seitenwand (2c);
- ein Filtrationsmedium (5), das an der äußeren Komponente (2) angebracht ist und sich in dem Filtrationsbereich (RF) zwischen dem Boden (2a) und dem oberen Ende (2b) erstreckt; und
- einen Ausgang (6) zum Austritt von gefiltertem flüssigem Wasser, wobei das Filtrationsmedium (5) zwischen dem mindestens einen Eingang (4) und dem Ausgang (6) angeordnet ist;
wobei die Filtrationsvorrichtung (1) aufweist:
- eine Verbindungsanordnung (7), die an der äußeren Komponente (2) gebildet ist und ein Fluidverbindungsstück (RC) zum Verbinden mit einem Ansaugpfad (L8) für flüssiges Wasser, der zur Speisepumpe (80) gehört, aufweist; und
- das Auftreten von Luftblasen in dem Ansaugpfad (L8) behindernde Einrichtungen (M1, M2), die stromauf des von dem Fluidverbindungsstück (RC) gebildeten Ausgangs (6) angeordnet sind.

2. Anordnung nach Anspruch 1, in welcher die das Auftreten von Luftblasen behindernden Einrichtungen (M1, M2) ein für flüssiges Wasser durchlässiges Flächengebilde oder Gewebe (T) aufweisen, das konzipiert und angeordnet ist, um Hineinlassen von flüssigem Wasser in einen Aufwärtszirkulation-Wasserkanal (9) zu erlauben, der:
- sich stromab des Filtrationsmediums (5) erstreckt, in Filtrationsrichtung gesehen; und
- über den Ausgang (6) mit dem Ansaugpfad (L8) in Verbindung steht.

3. Anordnung nach Anspruch 2, in welcher der Aufwärtszirkulation-Wasserkanal (9) einen Eingang (14') hat, der angrenzend an einen unteren Durchlass (14) oder in Höhe eines unteren Durchlasses (14) gebildet ist, der von einer Unterkante (BP) einer Trennwand (P) begrenzt ist, die zwischen dem Filtrationsmedium (5) und dem Ausgang (6) angeordnet ist und auf das obere Ende (2b) trifft,
und in welcher die das Auftreten von Luftblasen behindernden Einrichtungen (M1, M2) aufweisen:
- das für flüssiges Wasser durchlässige Flächengebilde zum Unterdrücken oder Versperren des Durchtritts von Luftblasen (BB) zumindest in einem mit flüssigem Wasser benetzten Zustand des Flächengebildes, das in Form eines Gewebes (T) ist, das vorzugsweise stromauf bezüglich eines Abflussbereichs des gefilterten flüssigen Wassers angeordnet ist und entlang der Trennwand (P) auf der dem Kanal (9) gegenüberliegenden Seite gebildet ist; und
- mindestens eine Abflussöffnung (O2) für flüssiges Wasser, die die Trennwand (P) durchquert und vertikal höher als die und in Abstand von der Unterkante (BP) und tiefer als der Ausgang (6) angeordnet ist.

4. Anordnung nach Anspruch 1, 2 oder 3, in welcher die das Auftreten von Luftblasen in dem Ansaugpfad (L8) behindernden Einrichtungen (M1, M2) ein für flüssiges Wasser durchlässiges Gewebe (T) aufweisen, das stromauf eines Feststoffpartikel und/oder Stäube zurückhaltenden flächigen Mediums (L5) angeordnet ist.

5. Anordnung nach Anspruch 1, 2 oder 3, in welcher die das Auftreten von Luftblasen in dem Ansaugpfad (L8) behindernden Einrichtungen (M1, M2) ein für flüssiges Wasser durchlässiges Gewebe (T) aufweisen, das stromab eines Feststoffpartikel und/oder Stäube zurückhaltenden flächigen Mediums angeordnet ist.

6. Anordnung nach einem der Ansprüche 1 bis 5, in welcher die Verbindungsanordnung (7) einen gekrümmten Zirkulationspfad (VC) für gefiltertes Wasser begrenzt, wobei der gekrümmte Pfad einen Aufwärtszirkulationskanal (9) für von dem Filtrationsmedium (5) gefiltertes Wasser und einen von dem Fluidverbindungsstück (RC) begrenzten Ausgangskanal aufweist.

7. Anordnung nach Anspruch 6, aufweisend eine Trennwand (P), die fest verbunden oder integral mit dem Verbindungselement (7) ist,
in welcher das Filtrationsmedium (5) zwei sich gegenüberliegende Flächen (5a, 5b) aufweist, von denen die eine eine erste Fläche (5a) bildet, die ganz oder teilweise eine Oberstromzone (Z1) stromauf der von dem Filtrationsmedium (5) bereitgestellten Filtration definiert, und die andere eine zweite Fläche (5b) bildet, die eine mit dem Ausgang (6) in Verbindung stehende Unterstromzone (Z2) begrenzt,
und in welcher die Trennwand (P) zwischen der zweiten Fläche (5b) und dem Fluidverbindungsstück (RC) angeordnet ist, um den Filtrationsbereich (RF) von dem Aufwärtszirkulation-Wasserkanal (9), der für das von dem Filtrationsmedium (5) gefilterte Wasser bereitgestellt ist, zu trennen, wobei der Kanal (9) mit dem Ausgang (6) in Verbindung steht.

8. Anordnung nach einem der Ansprüche 1 bis 7, in welcher die Filtrationsvorrichtung (1) aufweist:
- eine Trennwand (P), die als eine im Wesentlichen vertikale Scheidewand in der Anordnung konzipiert ist und den Filtrationsbereich (RF) von einem Austrittsbereich (RE), der mit dem Ausgang (6) in Verbindung steht, trennt; und
- einen unteren Durchlass (14) nahe an dem Boden (2a) oder entlang des Bodens (2a), um das gefilterte Wasser von dem Filtrationsbereich (RF) hin zu dem Austrittsbereich (RE) weiterzuleiten;
und in welcher die Trennwand (P) konfiguriert ist, das Wasser zu zwingen, von dem unteren Durchlass (14) zumindest bis zu einem oberen Durchlass (15), der in das Innere eines männlichen Rohransatzes mündet, der Teil des Fluidverbindungsstücks (RC) ist, aufwärts zu steigen.

9. Anordnung nach Anspruch 8, in welcher das obere Ende (2b) der äußeren Komponente (2) durchlöchert ist, um über eine oder mehrere obere Öffnungen (19b) einen Austritt von Gas durch die Oberseite zu erlauben, zumindest in einer Phase des Füllens mit flüssigem Wasser (W), während welcher das Wasser zunächst eine Höhe, die dem unteren Durchlass (14) entspricht, erreicht, bevor es den Austrittsbereich (RE) weiter füllt.

10. Anordnung nach Anspruch 9, in welcher die obere Öffnung oder oberen Öffnungen (19b) vollständig höher als mindestens eine in dem unteren Ende (2a) gebildete untere Öffnung (19a) und in der Seitenwand (2c) gebildete seitliche Öffnungen (4a) angeordnet sind und diese ergänzen, um ein Netz von Öffnungen (4a, 19a, 19b) zum Füllen des Filtrationsbereichs (RF) mit Wasser zu bilden.

11. Anordnung nach einem der vorstehenden Ansprüche, in welcher die äußere Komponente (2) ein konkaves Wandelement (70) aufweist, von dem aus das Fluidverbindungsstück (RC), an dem der Ausgang (6) gebildet ist, nach außen vorspringt.

12. Modul (8) zur Entnahme und Verteilung von Wasser, das für eine Verbrennungskammer (400) eines Fahrzeugs (15) bestimmt ist, wobei das Modul die Filtrationsanordnung nach einem der Ansprüche 1 bis 11 aufweist, wobei die Filtrationsvorrichtung (1) auf dichte und lösbare Weise mit einem Fluidverbindungsanschluss verbunden ist, der:
- einen Zugang (E1) zu dem Flüssiges-Wasser-Ansaugpfad (L8) definiert, und
- nach außen in Richtung des ersten Innenraums (C1) mündet, um die Filtrationsvorrichtung (1) unterzubringen,
dank dessen die Filtrationsvorrichtung (1) abnehmbar in dem Modul (8) eingebaut ist und selektiv aus dem ersten Innenraum (C1) herausgenommen werden kann, ohne eine Komponente der Speisepumpe (80) auszubauen.

13. Modul (8) zur Entnahme und Verteilung von Wasser, das für eine Verbrennungskammer (400) eines Fahrzeugs (15) bestimmt ist, wobei das Modul die Filtrationsanordnung nach einem der Ansprüche 1 bis 11 aufweist, wobei die Filtrationsvorrichtung (1) auf nichtlösbare Weise mit einem Fluidverbindungsanschluss verbunden ist, der einen Zugang (E1) zu dem Flüssiges-Wasser-Ansaugpfad (L8) definiert, so dass es unmöglich ist, die Filtrationsvorrichtung (1) herauszunehmen, ohne einen Deckel (81) der Speisepumpe (80) auszubauen.

14. Verwendung einer Reinigungsanordnung für ein Wasserentnahmemodul (8) nach einem der Ansprüche 1 bis 11, um Filtrieren von flüssigem Wasser (W) und Weiterleiten dieses Wassers in einen Ansaugpfad (L8) einer Speisepumpe (80) zu erlauben, wenn die Filtrationsvorrichtung (1) in einem Wasserreservoir (55), das in einem Fahrzeug (15) mit Verbrennungsmotor vorhanden ist, eingetaucht ist, wobei die Pumpe (80) vorgesehen ist, um das gefilterte Wasser hin zu einer Verbrennungskammer (400) des Fahrzeugs (15) zirkulieren zu lassen, wobei die Filtrationsvorrichtung (1) aufweist:
i) eine äußere Komponente (2), die aufweist: mindestens einen Eingang (4), durch den das flüssige Wasser (W) des Wasserreservoirs einen Filtrationsbereich erreichen kann, ein oberes Ende (2b), einen dem oberen Ende (2b) gegenüberliegenden Boden (2a) und eine Seitenwand (2c);
ii) ein Filtrationsmedium (5), das an der äußeren Komponente (2) angebracht ist und sich in dem Filtrationsbereich zwischen dem Boden (2a) und dem oberen Ende (2b) zu erstrecken;
iii) einen Ausgang (6) zum Austritt von gefiltertem flüssigem Wasser, wobei das Filtrationsmedium (5) zwischen dem mindestens einen Eingang (4) und dem Ausgang (6) angeordnet ist;
iv) eine Verbindungsanordnung (7), die an der äußeren Komponente (2) gebildet ist und ein Fluidverbindungsstück (RC) zum Verbinden mit einem Flüssiges-Wasser-Ansaugpfad (L8), der zur Speisepumpe (80) gehört, aufweist; und
v) das Auftreten von Luftblasen in dem Ansaugpfad (L8) behindernde Einrichtungen (M1, M2), die separat von dem Filtrationsmedium (5) und/oder als zusätzliche Schicht mit einer stäube-trennenden Schicht des Filtrationsmediums (5) laminiert sind, wobei die Einrichtungen (M1, M2) stromauf des von dem Fluidverbindungsstück (RC) gebildeten Ausgangs (6) angeordnet sind,
wobei die Filtrationsvorrichtung (1) im Inneren eines Gehäuses eingebaut ist, das in dem Wasserreservoir (55) eingetaucht ist oder einen Unterabschnitt des Wasserreservoirs begrenzt und das auch einen Motorabschnitt der Speisepumpe (80) enthält.

15. Verwendung nach Anspruch 14, in welcher zwei separate Wege dazu dienen, parallel und in einem Ansaugmodus der Pumpe (80) das von dem Filtrationsmedium (5) gefilterte Wasser über eine Strohhalm-Ansaugstruktur, die sich zwischen einem unteren Durchlass (14) und einem in den Ausgang (6) mündenden oberen Durchlass (15) erstreckt, in das Fluidverbindungsstück (RC), das den Ausgang (6) bildet, weiterzuleiten, wobei die zwei Wege führen:
- der eine über eine Durchlassöffnung (14'), die an dem unteren Ende der vertikalen Strohhalm-Ansaugstruktur an einer an den unteren Durchlass (14) angrenzenden Position gebildet ist, um Weiterleiten des gefilterten Wassers, das sich an einem tiefen Punkt des Wasserreservoirs (55) befindet, zu erlauben;
- der andere über eine Druckausgleichsöffnung (O2), die sich mindestens 15mm höher als die Durchlassöffnung (14') befindet, um einen Transfer von gefiltertem Wasser zwischen dem Inneren der Strohhalmstruktur und dem Filtrationsbereich (RF) zu erlauben,
und in welcher der Durchlassquerschnitt der Durchlassöffnung (14') größer als der Durchlassquerschnitt der Öffnung (O2) ist und vorzugsweise mindestens zehn Mal größer.

## Claims

1. A purification arrangement for water sampling module (8), comprising a filtration device (1) for purifying liquid water (W) intended for a combustion chamber (400) of a vehicle (15), by being placed in a module body (18) provided:
- with a first interior compartment (C1) for housing the filtration device (1) immersed in water in a mounted state of the module (8) in a water tank (55); and
- a second interior compartment (C2) to house all or part of a feed pump (80);
the filtration device (1) comprising:
- an external component (2) which has at least one inlet (4) through which the liquid water (W) from the water tank can reach a filtration region (RF), an upper end (2b), a bottom (2a) opposite the upper end (2b) and a side wall (2c);
- a filter media (5), fixed to the external component (2) extending in the filtration region (RF) between the bottom (2a) and the upper end (2b); and
- an outlet (6) for discharging filtered liquid water, the filter media (5) being interposed between the at least one inlet (4) and the outlet (6);
knowing that the filtration device (1) has:
- a connection assembly (7) formed on the external component (2) and comprising a fluid connection fitting (RC) for connection with a liquid water suction path (L8) belonging to the feed pump (80); and
- means (M1, M2) for preventing the presence of air bubbles in said suction path (L8), which are arranged upstream of the outlet (6) formed by the fluid connection fitting (RC).

2. The arrangement according to claim 1, wherein the means (M1, M2) for preventing the presence of air bubbles comprise a layer or fabric (T) permeable to liquid water, designed and arranged to allow the passage of liquid water through a channel (9) for ascending water circulation which:
- extends downstream of the filter media (5) following the direction of filtration; and
- communicates with the suction path (L8) via the outlet (6).

3. The arrangement according to claim 2, wherein the channel (9) for ascending water circulation has an inlet (14') adjacent to or made at a lower passage (14) delimited by a lower edge (BP) of a separation wall (P) which is interposed between the filter media (5) and the outlet (6) and which joins the upper end (2b),
and wherein the means (M1, M2) for preventing the presence of air bubbles comprise:
- the layer permeable to liquid water arranged to eliminate or block the passage of air bubbles (BB), at least in a state wetted by the liquid water of the layer which is in the form of a fabric (T), preferably placed upstream with respect to a filtered liquid water flow region formed along the separation wall (P) opposite said channel (9); and
- at least one orifice (O2) for the flow of liquid water which passes through the separation wall (P) being located vertically higher and at a distance from the lower edge (BP), and lower than the outlet (6).

4. The arrangement according to claim 1, 2 or 3, wherein said means (M1, M2) for preventing the presence of air bubbles in said suction path (L8) comprise a fabric (T) permeable to liquid water placed upstream of a layer (L5) of media for retaining solid particles and/or dust.

5. The arrangement according to claim 1, 2 or 3, wherein said means (M1, M2) for preventing the presence of air bubbles in said suction path (L8) comprise a fabric (T) permeable to liquid water placed downstream of a layer of media for retaining solid particles and/or dust.

6. The arrangement according to any one of claims 1 to 5, wherein the connection assembly (7) delimits a bent path (VC) for circulating filtered water, the bent path including a channel (9) for ascending circulation of water filtered by the filter media (5) and an outlet channel delimited by the fluid connection fitting (RC).

7. The arrangement according to claim 6, comprising a separation wall (P) integral with or included in the connecting element (7),
wherein the filter media (5) has two opposite faces (5a, 5b), one of which constitutes a first face (Sa) defining all or part of an upstream zone (Z 1), upstream of the filtration by the filter media (5), and the other constitutes a second face (5b) delimiting a downstream zone (Z2) in communication with the outlet (6), and wherein the separation wall (P) is interposed between the second face (5b) and the fluid connection fitting (RC) to separate the filtration region (RF) from the channel (9) for ascending circulation of water filtered by the filter media (5), said channel (9) communicating with the outlet (6).

8. The arrangement according to any one of claims 1 to 7, wherein the filtration device (1) comprises:
- a separation wall (P) designed as a substantially vertical partition in the arrangement and separating the filtration region (RF) from an evacuation region (RE) in communication with the outlet (6); and
- a lower passage (14) close to the bottom (2a) or along the bottom (2a) for conveying filtered water from the filtration region (RF) to the evacuation region (RE);
and wherein the separation wall (P) is configured to force the water to rise upwards from the lower passage (14) at least to an upper passage (15) opening inside a tubular male end which is part of the fluid connection fitting (RC).

9. The arrangement according to claim 8, wherein the upper end (2b) of the external component (2) is perforated to allow, via one or more upper openings (19b), an evacuation of gas from above at least in one phase of filling with liquid water (W) during which the water first reaches a level corresponding to the lower passage (14) before further filling the discharge region (RE).

10. The arrangement according to claim 9, wherein the upper opening(s) (19b) are located entirely higher than and complement at least one lower opening (19a) formed in the lower end (2a) and side openings (4a) formed in the side wall (2c) to form an array of openings (4a, 19a, 19b) for filling the filtration region (RF) with water.

11. The arrangement according to any one of the preceding claims, wherein the external component (2) has a concave wall element (70) from which projects, towards the outside, the fluid connection fitting (RC) where the outlet (6) is formed.

12. A module (8) for sampling and distributing water intended for a combustion chamber (400) of a vehicle (15), the module comprising the filtration arrangement according to any one of claims 1 to 11, the filtration device (1) being connected, in a sealed and removable manner, to a fluid connection port which:
- defines an inlet (E1) for access to the liquid water suction path (L8); and
- opens externally towards the first interior compartment (C1) to house the filtration device (1),
whereby the filtration device (1) is removably mounted in the module (8) and can be selectively removed from the first interior compartment (C1) without dismantling a component of the feed pump (80).

13. The module (8) for sampling and distributing water intended for a combustion chamber (400) of a vehicle (15), the module comprising the filtration arrangement according to any one of claims 1 to 11, the filtration device (1) being connected in an unremovable manner to a fluid connection port which defines an inlet (E1) for access to the liquid water suction path (L8), so that it is impossible to extract the filtration device (1) without dismantling a cover (81) from the feed pump (80).

14. A use of a purification arrangement for a water sampling module (8) according to any one of claims 1 to 11 to enable liquid water to be filtered (W) and convey this water into a suction path (L8) of a feed pump (80), in a submerged state of the filtration device (1) inside a water tank (55) present in a vehicle (15) with an internal combustion engine, the pump (80) being intended to circulate the filtered water towards a combustion chamber (400) of the vehicle (15), the filtration device (1) including:
i) an external component (2) which has at least one inlet (4) through which liquid water (W) from the water tank can reach a filtration region, an upper end (2b), a bottom (2a) opposite the upper end (2b) and a side wall (2c);
ii) a filter media (5), fixed to the external component (2) extending in the filtration region between the bottom (2a) and the upper end (2b);
iii) an outlet (6) for discharging filtered liquid water, the filter media (5) being interposed between the at least one inlet (4) and the outlet (6);
iv) a connection assembly (7) formed on the external component (2) and comprising a fluid connection fitting (RC) for connection with a liquid water suction path belonging to the feed pump (80); and
v) means (M1, M2), distinct from the filter media (5) and/or laminated as an additional layer with a dust separation layer of the filter media (5), for preventing the presence of air bubbles in said suction path (L8), said means (M1, M2) being arranged upstream of the outlet (6) formed by the fluid connection fitting (RC);
the filtration device (1) being mounted inside a housing which is immersed in the water tank (55) or delimits a sub-part of the water tank and which also houses a motor part of the feed pump (80).

15. The use according to claim 14, wherein two separate paths are used, in parallel and in a suction mode of the pump (80), to convey water filtered by the filter media (5) into the fluid connection fitting (RC) forming the outlet (6), via a suction straw structure which extends between a lower passage (14) and an upper passage (15) opening into the outlet (6), the two paths passing:
- one through a passage opening (14') formed at the lower end of the vertical suction straw structure, in a position adjacent to the lower passage (14), in order to allow filtered water to be conveyed located in a low point of the water tank (55);
- the other through a pressure balancing orifice (O2) located at least 15 mm higher than said passage opening (14'), in order to allow a transfer of filtered water between the interior of the straw structure and the filtration region (RF), and wherein the passage section of the passage opening (14') is larger than the passage section of the orifice (O2), and preferably at least ten times larger.
